# EUROPEAN PATENT SPECIFICATION

(11) **EP 4 600 833 B1**
(45) Date of publication and mention of the grant of the patent: **28.10.2026**
(21) Application number: 25154967.1
(22) Date of filing: 30.01.2025
(51) Int. Cl.: G06F 12/0868

(54) **SYSTEMS AND METHODS FOR CACHE MANAGEMENT OF TIERED STORAGE DEVICES**
SYSTEME UND VERFAHREN ZUR CACHE-VERWALTUNG VON ABGESTUFTEN SPEICHERVORRICHTUNGEN
SYSTÈMES ET PROCÉDÉS DE GESTION DE MÉMOIRE CACHE DE DISPOSITIFS DE STOCKAGE À PLUSIEURS NIVEAUX

(30) Priority: 08.02.2024 US 202463551494 P; 19.11.2024 US 202418953058
(43) Date of publication of application: 13.08.2025
(73) Proprietor: Samsung Electronics Co., Ltd., Suwon-si, Gyeonggi-do 16677 (KR)
(72) Inventor: LI, Zongwang, San Jose, CA, 95134 (US); KI, Yang Seok, San Jose, CA, 95134 (US); PITCHUMANI, Rekha, San Jose, CA, 95134 (US)
(74) Representative: Kuhnen & Wacker Patent- und Rechtsanwaltsbüro PartG mbB

(56) References cited:
- US-A1- 2016 179 687
- US-A1- 2016 364 312

## Description

### FIELD

The disclosure relates generally to storage, and more particularly cache management in storage devices.

### BACKGROUND

Tiered storage devices may use one tier as a cache for data normally stored in the other tier. But managing the caching in the tiered storage device may only offer one approach that does not work well for all applications.

A need remains to improve management of the cache in a tiered storage device.

US 2016/179687 A1 discloses updating persistent data in persistent memory-based storage.

### SUMMARY

The invention is set out in the appended set of claims. According to one embodiment of the disclosure, a device may include a cache processor to execute an instruction on behalf of an application; and a storage medium to store the instruction, wherein the instruction is part of a cache program associated with the application, and wherein the device communicates with at least one of a first storage and a second storage of a storage device based at least in part on the instruction.

According to one embodiment of the disclosure, a storage device may include a first storage for a data; a second storage for the data; a data controller to manage access to the data on the first storage and the second storage; and a device, including: a cache processor to execute an instruction on behalf of an application; and a storage medium to store the instruction, wherein the instruction is part of a cache program associated with the application, and wherein the device communicates with at least one of the first storage and the second storage of based at least in part on the instruction.

According to one embodiment of the disclosure, a method may include receiving, at a device, a request from an application executing on a processor to access a data stored on a storage device; determining, by the device, whether the data is stored on a first storage or a second storage of the storage device; and using, by the device, a cache program associated with the application to manage the data on the first storage and the second storage of the storage device.

### BRIEF DESCRIPTION OF THE DRAWINGS

The drawings described below are examples of how embodiments of the disclosure may be implemented, and are not intended to limit embodiments of the disclosure. Individual embodiments of the disclosure may include elements not shown in particular figures and/or may omit elements shown in particular figures. The drawings are intended to provide illustration and may not be to scale.
FIG. 1 shows a machine including a tiered storage device, according to embodiments of the disclosure.
FIG. 2 shows details of the machine of FIG. 1, according to embodiments of the disclosure.
FIG. 3 shows details of the tiered storage device of FIG. 1, according to embodiments of the disclosure.
FIG. 4 shows details of the cache core of FIG. 3, according to embodiments of the disclosure.
FIG. 5 shows how the cache core of FIG. 3 may receive a programmable cache script from an application, according to embodiments of the disclosure.
FIG. 6 shows how the controller of FIG. 3, the cache core of FIG. 3, the data controller of FIG. 3, and the storages of FIG. 3 may communicate, according to embodiments of the disclosure.
FIG. 7 shows information that may be stored in the SRAM of FIG. 3, according to embodiments of the disclosure.
FIG. 8A shows a flowchart of an example procedure for the tiered storage device of FIG. 1 to perform cache management, according to embodiments of the disclosure.
FIG. 8B continues the flowchart of an example procedure for the tiered storage device of FIG. 1 to perform cache management, according to embodiments of the disclosure.
FIG. 8C continues the flowchart of an example procedure for the tiered storage device of FIG. 1 to perform cache management, according to embodiments of the disclosure.
FIG. 8D continues the flowchart of an example procedure for the tiered storage device of FIG. 1 to perform cache management, according to embodiments of the disclosure.
FIG. 8E continues the flowchart of an example procedure for the tiered storage device of FIG. 1 to perform cache management, according to embodiments of the disclosure.
FIG. 9 shows a flowchart of an example procedure for the cache core of FIG. 3 to perform cache management in the tiered storage device of FIG. 1, according to embodiments of the disclosure.
FIG. 10 shows a flowchart of an example procedure for the cache core of FIG. 1 to receive a request from the application of FIG. 5, according to embodiments of the disclosure.
FIG. 11 shows a flowchart of an example procedure for the cache core of FIG. 3 to execute an instruction from the programmable cache script of FIG. 7, according to embodiments of the disclosure.
FIG. 12 shows a flowchart of an example procedure to manage a cache hit in the tiered storage device of FIG. 1, according to embodiments of the disclosure.
FIG. 13A shows a flowchart of an example procedure to manage a cache miss in the tiered storage device of FIG. 1, according to embodiments of the disclosure.
FIG. 13B continues the flowchart of an example procedure to manage a cache miss in the tiered storage device of FIG. 1, according to embodiments of the disclosure.
FIG. 14A shows a flowchart of an example procedure to manage evicting data from the DRAM of FIG. 3 in the tiered storage device of FIG. 1, according to embodiments of the disclosure.
FIG. 14B continues the flowchart of an example procedure to manage evicting data from the DRAM of FIG. 3 in the tiered storage device of FIG. 1, according to embodiments of the disclosure.

### DETAILED DESCRIPTION

Reference will now be made in detail to embodiments of the disclosure, examples of which are illustrated in the accompanying drawings. In the following detailed description, numerous specific details are set forth to enable a thorough understanding of the disclosure. It should be understood, however, that persons having ordinary skill in the art may practice the disclosure without these specific details. In other instances, well-known methods, procedures, components, circuits, and networks have not been described in detail so as not to unnecessarily obscure aspects of the embodiments.

It will be understood that, although the terms first, second, etc. may be used herein to describe various elements, these elements should not be limited by these terms. These terms are only used to distinguish one element from another. For example, a first module could be termed a second module, and, similarly, a second module could be termed a first module, without departing from the scope of the disclosure.

The terminology used in the description of the disclosure herein is for the purpose of describing particular embodiments only and is not intended to be limiting of the disclosure. As used in the description of the disclosure and the appended claims, the singular forms "a", "an", and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. The components and features of the drawings are not necessarily drawn to scale.

Tiered storage devices are becoming more common. Some tiered storage devices may be compatible with Compute Express Link^{®} (CXL^{®}) storage devices. (Compute Express Link and CXL are registered trademarks of the Compute Express Link Consortium, Inc.) In a tiered storage device, there may be two or more tiers of storage. One tier of storage may have a relatively larger capacity but may be relatively slow to access, and another tier of storage may have a relatively smaller capacity but may be relatively faster to access. For example, a tiered storage device might include Not-And (NAND) flash and Dynamic Random Access Memory (DRAM). The NAND flash may be relatively large in capacity, but the DRAM may be faster to access. The tiered storage device may use the DRAM as a cache for data from the NAND flash: data being used may be copied from the NAND flash into the DRAM to enable faster access.

If all other things were equal, the tiered storage device might include the same amount of DRAM as NAND flash. In that manner, the entirety of the data stored in the NAND flash may be copied into DRAM for faster access. But DRAM may be more expensive on a per-gigabyte basis than NAND flash. Thus, to keep the cost of manufacture (and therefore the price of the tiered storage device) low, the tiered storage device may include more NAND flash capacity than DRAM capacity.

When the tiered storage device includes more NAND flash capacity than DRAM capacity, the DRAM may be used as a cache. Data may be copied from the NAND flash into the DRAM when in use. Then, when new data is to be moved into the DRAM, older data may be evicted from the DRAM to free up space for the new data.

To manage the DRAM, tiered storage devices may include cache management schemes. For example, the tiered storage device may implement a least frequently used (LFU) or a least recently used (LRU) cache algorithm. Using such cache algorithms, when new data is to be added to the DRAM, the least frequently used or least recently used data may be evicted from the DRAM to make room for the new data.

But using a specific cache algorithm (or script), such as LFU or LRU, is a one-size-fits-all approach. Such algorithms might work well enough most of the time. But there may be applications for which such algorithms are not optimal, and therefore may result in data being added to or evicted from the DRAM more often than is desirable.

Embodiments of the disclosure address these concerns by enabling applications to provide their own cache algorithms. These cache algorithms may be implemented using a software development kit and may be loaded into the cache processor by the application. Because these cache algorithms may be tailored to suit the workload of the application, the cache algorithms may provide improved use of the cache in a tiered storage device, which may result in overall faster data access.

The programmable cache algorithms may specify what data may be loaded into DRAM and what data may be evicted from DRAM, when needed. The programmable cache may then track what data is stored in the DRAM, so that cache hits and misses may be determined when the application issues read and/or write requests, and may invoke the appropriate threads in the programmable cache algorithms to select what data (and when) to copy into the DRAM and what data (and when) to evict from the DRAM. The programmable cache algorithms may also implement pre-fetching of data appropriate for the application.

The cache processor may include one or more cores. If the cache processor includes one core, a thread arbitrator may manage which thread of the programmable cache algorithm is running. Otherwise, different threads may run in different cores.

Each application may have its own programmable cache algorithm, which may manage the caching of data in the DRAM for that application. Applications that do not have a programmable cache algorithm may use a default cache algorithm, enabling applications that do not have their own programmable cache algorithms to continue to function.

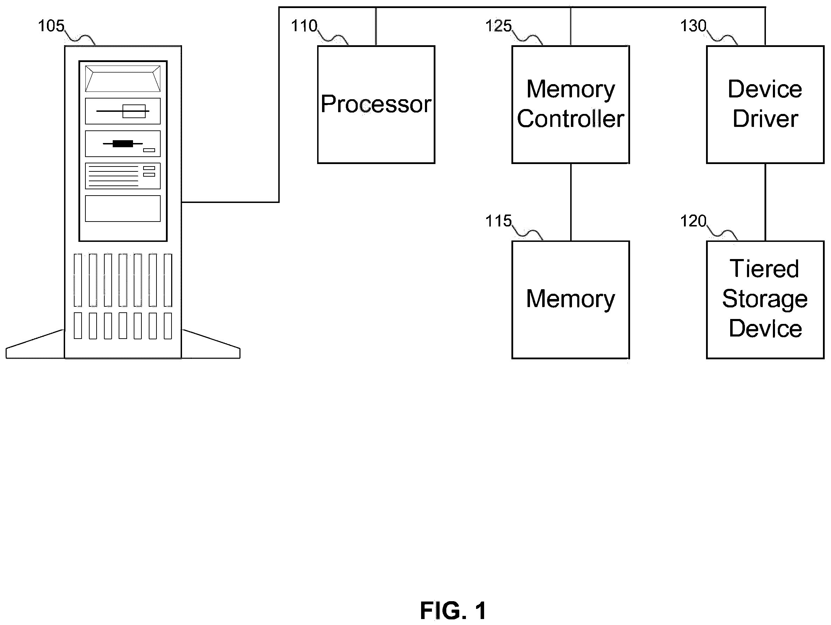

FIG. 1 shows a machine including a tiered storage device, according to embodiments of the disclosure. In FIG. 1, machine 105, which may also be termed a host or a system, may include processor 110, memory 115, and tiered storage device 120 (which may also be termed a tiered memory device). Machine 105 may also include other components not shown in FIG. 1: for example, a storage device that is not a tiered storage device.

Processor 110, which may also be referred to as a host processor, may be any variety of processor. (Processor 110, along with the other components discussed below, are shown outside the machine for ease of illustration: embodiments of the disclosure may include these components within the machine.) While FIG. 1 shows a single processor 110, machine 105 may include any number (one or more, without bound) of processors, each of which may be single core or multi-core processors, each of which may implement a Reduced Instruction Set Computer (RISC) architecture or a Complex Instruction Set Computer (CISC) architecture (among other possibilities), and may be mixed in any desired combination.

Processor 110 may be coupled to memory 115. Memory 115, which may also be referred to as a main memory, may be any variety of memory, such as flash memory, Dynamic Random Access Memory (DRAM), Static Random Access Memory (SRAM), Persistent Random Access Memory, Ferroelectric Random Access Memory (FRAM), or Non-Volatile Random Access Memory (NVRAM), such as Magnetoresistive Random Access Memory (MRAM) etc. Memory 115 may also be any desired combination of different memory types, and may be managed by memory controller 125. Memory 115 may be used to store data that may be termed "short-term": that is, data not expected to be stored for extended periods of time. Examples of short-term data may include temporary files, data being used locally by applications (which may have been copied from other storage locations), and the like.

Processor 110 and memory 115 may also support an operating system under which various applications may be running. These applications may issue requests (which may also be termed commands) to read data from or write data to either memory 115 or storage devices 120. Whereas memory 115 may be used to store data that is considered "short-term", tiered storage device 120 may be used to store data that is considered "long-term": that is, data that is expected to be retained for longer periods of time and that should be retained in a persistent manner, even if deliver of power to machine 105 should be interrupted.

While FIG. 1 shows machine 105 as including only one tiered storage device 120, embodiments of the disclosure may include any number (one or more) of tiered storage devices 120. Tiered storage device 120 may be accessed using device driver 130. In situations where machine 105 includes multiple tiered storage devices 120, each tiered storage device 120 may be accessed using a separate device driver 130, one device driver 130 may be used to access all tiered storage devices 120, or any combination thereof.

Tiered storage device 120 may be associated with an accelerator (not shown in FIG. 1). Such an accelerator may be used for, for example, near-data processing. That is, the accelerator may be used to process data closer to tiered storage device 120, to reduce or eliminate transfer of data from tiered storage device 120 into memory 115. The use of an accelerator for near-data processing may also offload processing from processor 110, as the accelerator may perform such processing instead of processor 110. Like processor 110, such an accelerator may implement a Reduced Instruction Set Computer (RISC) architecture or a Complex Instruction Set Computer (CISC) architecture (among other possibilities), and may be implemented using a Central Processing Unit (CPU), a Field Programmable Gate Array (FPGA), an Application-Specific Integrated Circuit (ASIC), A System-on-a-Chip (SoC), a Graphics Processing Unit (GPU), a General Purpose GPU (GPGPU), a Neural Processing Unit (NPU), or a Tensor Processing Unit (TPU).

The combination of tiered storage device 120 and accelerator may also be referred to as a computational storage device, computational storage unit, or computational device. Tiered storage device 120 and an accelerator may be designed and manufactured as a single integrated unit, or the accelerator may be separate from tiered storage device 120. The phrase "associated with" is intended to cover both a single integrated unit including both a tiered storage device and an accelerator and a tiered storage device that is paired with an accelerator but that are not manufactured as a single integrated unit. In other words, a tiered storage device and an accelerator may be said to be "paired" when they are physically separate devices but are connected in a manner that enables them to communicate with each other. Further, in the remainder of this document, any reference to tiered storage device 120 may be understood to refer to both tiered storage device 120 and the accelerator either as physically separate but paired (and therefore may include the other device) or to both devices integrated into a single component as a computational storage unit.

In addition, the connection between tiered storage device 120 and the paired accelerator might enable the two devices to communicate, but might not enable one (or both) devices to work with a different partner: that is, tiered storage device 120 might not be able to communicate with another accelerator, and/or the accelerator might not be able to communicate with another tiered storage device 120. For example, tiered storage device 120 and the paired accelerator might be connected serially (in either order) to the fabric, enabling the accelerator to access information from tiered storage device 120 in a manner another accelerator might not be able to achieve.

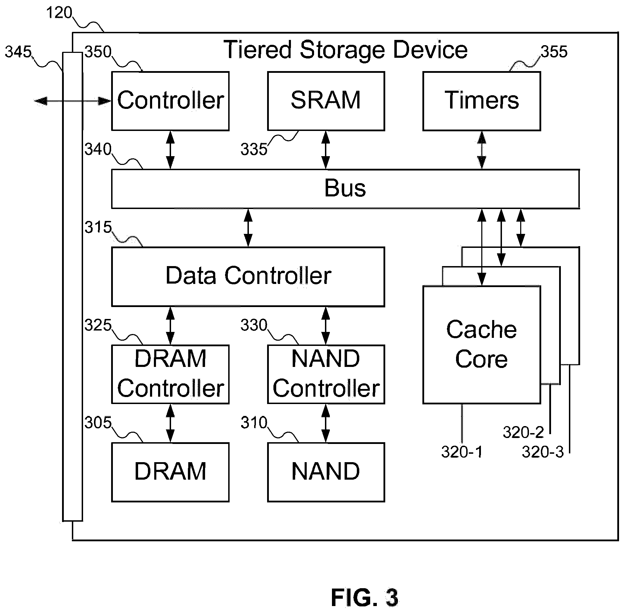

As discussed with reference to FIG. 3, below, tiered storage device 120 may include multiple tiers of storage, each of which may be considered a separate storage device. Embodiments of the disclosure may include any storage device formats, examples of which may include memory such as DRAM, hard disk drives, and Solid State Drives (SSDs). In addition, different tiered storage devices 120 may use the same or different types of storage devices. For example, one tiered storage device 120 might include an SSD, whereas another tiered storage device 120 might include a hard disk drive. Any reference to a specific type of storage device, such as an "SSD", below should be understood to include such other embodiments of the disclosure.

In some embodiments of the disclosure, tiered storage device 120 may operate as a storage device, receiving requests to read or write data (for example, using the CXL.io protocol). Processor 110 may issue requests to read or write data associated with particular addresses (which may be logical addresses), and tiered storage device 120 may then determine where that data is stored. Note that in embodiments of the disclosure where tiered storage device 120 operates as a storage device, processor 110 may issue different types of requests to access data from memory 115 and from tiered storage device 120. In other embodiments of the disclosure, tiered storage device 120 may operate as an extension of memory, receiving requests to load or store data (for example, using the CXL.mem protocol). Processor 110 may issue requests to load or store data associated with particular addresses (which tiered storage device 120 may interpret as logical addresses), and tiered storage device 120 may then determine where that data is stored. Note that in the embodiments of the disclosure where tiered storage device 120 receives requests to load or store data, the requests may be identical in structure to those processor 110 may issue to memory 115. That is, from the perspective of processor 110, memory 115 and tiered storage device 120 may appear to be a continuous block of memory addresses, all accessible using the same type of requests. But in either case, the relatively faster storage tier in tiered storage device 120 may function as a cache for data stored on the relatively slower storage tier.

Processor 110 and tiered storage device 120 may communicate across a fabric (not shown in FIG. 1). This fabric may be any fabric along which information may be passed. Such fabrics may include fabrics that may be internal to machine 105, and which may use interfaces such as Peripheral Component Interconnect Express (PCIe), Serial AT Attachment (SATA), or Small Computer Systems Interface (SCSI), among others. Such fabrics may also include fabrics that may be external to machine 105, and which may use interfaces such as Ethernet, Infiniband, or Fibre Channel, among others. In addition, such fabrics may support one or more protocols, such as Non-Volatile Memory Express (NVMe), NVMe over Fabrics (NVMe-oF), Simple Service Discovery Protocol (SSDP), or a cache-coherent interconnect protocol, such as the Compute Express Link ^{®} (CXL^{®}) protocol, among others. (Compute Express Link and CXL are registered trademarks of the Compute Express Link Consortium in the United States.) Thus, such fabrics may be thought of as encompassing both internal and external networking connections, over which commands may be sent, either directly or indirectly, to tiered storage device 120. In embodiments of the disclosure where such fabrics support external networking connections, tiered storage device 120 might be located external to machine 105, and tiered storage device 120 might receive requests from a processor remote from machine 105.

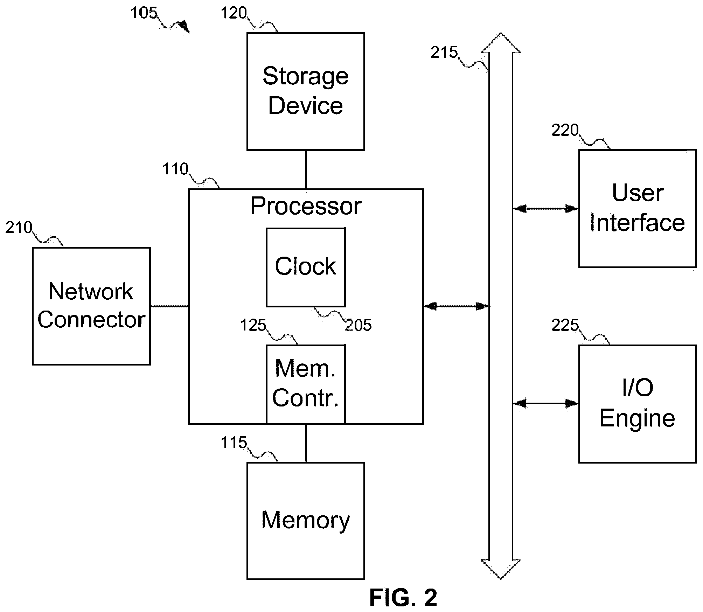

FIG. 2 shows details of the machine of FIG. 1, according to embodiments of the disclosure. In FIG. 2, typically, machine 105 includes one or more processors 110, which may include memory controllers 125 and clocks 205, which may be used to coordinate the operations of the components of the machine. Processors 110 may also be coupled to memories 115, which may include random access memory (RAM), read-only memory (ROM), or other state preserving media, as examples. Processors 110 may also be coupled to storage devices 120, and to network connector 210, which may be, for example, an Ethernet connector or a wireless connector. Processors 110 may also be connected to buses 215, to which may be attached user interfaces 220 and Input/Output (I/O) interface ports that may be managed using I/O engines 225, among other components.

FIG. 3 shows details of tiered storage device 120 of FIG. 1, according to embodiments of the disclosure. In FIG. 3, tiered storage device 120 is shown. Tiered storage device 120 may include DRAM 305, Not-And (NAND) flash 310, data controller 315, and cache cores 320-1, 320-2, and 320-3 (which may be referred to collectively as cache cores 320).

DRAM 305 and NAND flash 310 may act as two tiers of storage in tiered storage device 120. DRAM 305 may offer a relatively faster access than NAND flash 310, but may offer a lower capacity than NAND flash 310. In addition, in some embodiments of the disclosure, DRAM 305 may have a higher per unit cost than NAND flash 310, which may explain why the capacity of NAND flash 310 may be larger than DRAM 305. DRAM 305, as the relatively faster storage, may be used as a cache for data normally stored in NAND flash 310. While FIG. 3 shows the tiers of storage as DRAM 305 and NAND flash 310, embodiments of the disclosure may include any desired forms of storage as the tiers of storage, with the expectation that one tier will be relatively faster than the other tier but have a relatively smaller capacity. For example, DRAM 325 might be replaced with NAND flash 310, and NAND flash 310 might be replaced with a hard disk drive.

DRAM 305 may controlled by DRAM controller 325, and NAND flash 310 may be controlled by NAND controller 330. Controllers 325 and 330 may be responsible for accessing data from the associated storages. For example, DRAM controller 325 may function similarly to memory controller 125 of FIG. 1 to access data from DRAM 305. Similarly, NAND controller 330 may take a logical address, map the logical address to a physical address in NAND flash 310, and may then access the data from NAND flash 310. In other words, the combination of DRAM 305 and DRAM controller 325 may be viewed as a storage device, and the combination of NAND controller 330 and NAND flash 310 may be viewed as another storage device.

While FIG. 3 shows two tiers of storage in DRAM 305 and NAND flash 310, embodiments of the disclosure may include any number (two or more) of tiers of storage. In addition, one tier of storage may act as a cache for multiple other tiers of storage, and/or each tier of storage may act as a cache for the tier of storage below it. For example, if tiered storage device 120 also included a hard disk drive (with its associated hard disk drive controller), DRAM 305 might act as a cache for NAND flash 310 and NAND flash 310 might act as a cache for the hard disk drive, or DRAM 305 might act as a cache for data stored on either NAND flash 310 or the hard disk drive.

It might be noted that DRAM 305 may be a volatile storage medium. Provided that the data is always stored persistently somewhere-for example, on NAND flash 310-it is OK for DRAM 305 to be a volatile form of storage. But to avoid accidental data loss due to, for example, a power interruption, any data written to DRAM 305 by an application may also be written to NAND flash 310 (instead of writing the data only to DRAM 305 and identifying that data as pending writing to NAND flash 310), or tiered storage device 120 may include (either internally or externally) a backup power source, such as a battery or a capacitor, to support transferring any data stored on DRAM 305 that has not yet been written to NAND flash 310.

Data controller 315 may manage accessing data (which may include, among other possibilities, reading, writing, or deleting data) from DRAM 305 and NAND flash 310 (via DRAM controller 325 and NAND controller 330). That is, cache core 320 may send requests to access data to data controller 315, which may then deliver the requests to the appropriate controller (and thence to its associated storage). But in some embodiments of the disclosure, cache core 320 may send requests directly to the controllers of the associated storage media, and data controller 315 may be eliminated, with the functions of data controller 315 potentially incorporated into cache core 320.

Cache core 320, which may also be termed a programmable cache processor, a programmable cache, a device, or a cache processor, may act as the "brains" of cache management in tiered storage device 120. Cache core 320 may determine whether data, for which an application has requested access, is currently cached in DRAM 305 or not: if the data is not currently cached in DRAM 305, cache core 320 may manage copying the data from NAND flash 310 to DRAM 305 (for caching against later access requests). If there is no free space currently in DRAM 305, cache core 320 may also manage evicting data from DRAM 305 to make room for new data. Cache core 320 may also manage pre-fetching of data that the application is expected to access soon, and potentially to proactively evict data from DRAM 305 (when such data is considered unlikely to be accessed again by the application).

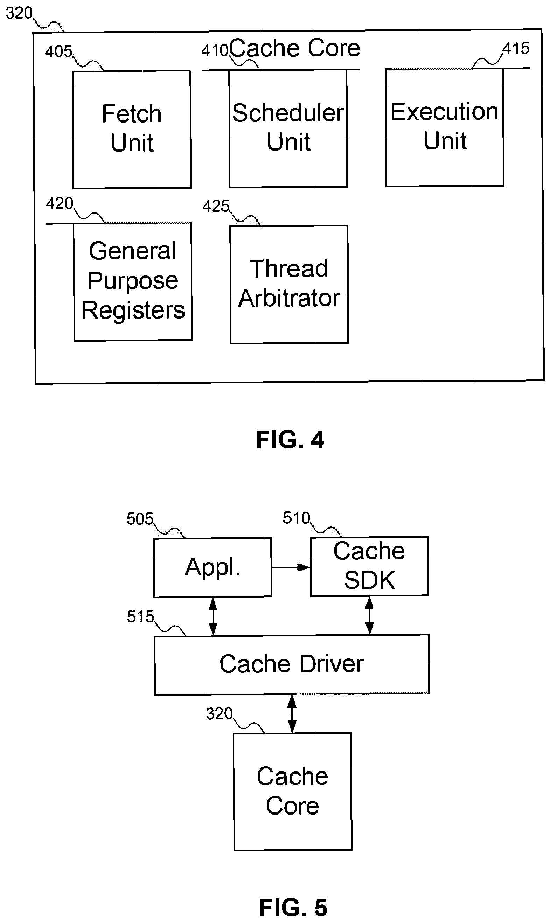

From the above description, it might sound like cache core 320 operates according to a pre-programmed schedule. But while determining whether data is currently cached in DRAM 305 might be a simple yes/no question, unaffected by any preference of the application, how a particular data access may affect data currently cached in DRAM 305, when to copy data from NAND flash 310 to DRAM 305, and when to evict data from DRAM 305 are among the possible options that may vary depending on the operation of cache core 320. For example, instead of offering a one-size-fits-all solution of evicting data that is the least frequently used (LFU) or the least recently used (LRU), an application may specify its own algorithm (or script) for selecting data to evict from DRAM 305. Similarly, an application might specify its own scripts for how accesses of data in DRAM 305 (or NAND flash 310) might be tracked to determine whether the data should be copied from NAND flash 310 to DRAM 305, or whether the data should be considered for eviction from DRAM 305 to make room for other data. Further, an application might specify its own scripts for when to pre-fetch data from NAND flash 310 to DRAM 305, or when to "spontaneously" evict data from DRAM 305 (even if there is currently no need to make room for other data in DRAM 305). In this manner, an application may attempt to optimize how DRAM 305 is used to cache data on behalf of the application, which may offer superior cache management to the "one-size-fits-all" approach that might otherwise be used. How an application may provide a programmable cache script (which may also be termed a cache management script, a programmable script, a cache script, a programmable cache management algorithm, a programmable algorithm, a cache program, or a cache algorithm) to cache core 320 is discussed further with reference to FIG. 5 below.

But cache core 320 may still offer a default cache script, such as LFU or LRU data eviction. By offering a default cache script, cache core 320 may be used even by an application that does not provide its own programmable cache script. (Cache core 320 might offer more than one pre-programmed cache script, but to support the use of applications that do not provide their own programmable cache scripts or request the use of a particular cache script, one such pre-programmed cache script may be identified as the default cache script.) An application may even request the use of a default cache script even if the application provides its own programmable cache script. For example, it might be that the programmable cache script provided by an application might work well under most circumstances but might be known to be less than optimal in specific situations, and when those specific situations occur the application might request switching to the default cache script (and when the specific situations have passed, the application might request returning to the programmable cache script). Alternatively, an application might provide multiple programmable cache scripts and might request different programmable cache scripts be used at different times.

To support the use of two or more different cache scripts (whether programmable or default), each cache script may be provided an identifier. This identifier might be provided by the application or by cache core 320. The Application may then send a command to cache core 320 when a particular cache script is to be used, providing the identifier of the cache script. Note that the default cache script may also include its own identifier.

The use of identifiers may also enable reuse of a programmable cache script. For example, consider the situation where two different applications both use a common programmable cache script, or the situation where the same application is being used by different users. In such situations, there is no need for multiple copies of the programmable cache script to be provided to cache core 320: the programmable cache script may be provided once to cache core 320, and any subsequent applications that wish to use the programmable cache script may request that cache core 320 use the programmable cache script by providing the identifier of the cache script in a command to cache core 320.

In situations where multiple applications may be using tiered storage device 120 at the same time, DRAM 305 (and potentially NAND flash 310) may be "partitioned" in different portions, and different cache scripts (either programmable or default) may be used with different portions of DRAM 305. For example, DRAM 305 may normally include a range of addresses, such as 0x1000 0000 0000 0000 0000 0000 0000 0000 0000 (0 to 32 gigabytes (GB)). But only addresses 0x0000 0000 0000 0000 0000 0000 0000 0000 0000 to 0x0000 0100 0000 0000 0000 0000 0000 0000 0000 (0 to 1 GB) might be assigned to a particular application. Then, any requests that specify an address in this range may be managed using the specified cache script, and different cache scripts may be used with addresses in different ranges. Alternatively, when an application sends a request to access data to tiered storage device 120, the request may be tagged with an identifier of the application, and any requests with that tag may be managed using the specified cache script (with requests that have other tags or no tag using other cache scripts).

In some embodiments of the disclosure, tiered storage device 120 may include one cache core 320. In such embodiments of the disclosure, cache core 320 may be responsible for executing all cache scripts (whether programmable and provided by an application or default), and all threads of the cache scripts. In other embodiments of the disclosure, tiered storage device 120 may include more than one cache core 320, in which case each cache core 320 may execute a different cache script (either programmable or default), or each cache core 320 may execute a separate thread of a single cache script.

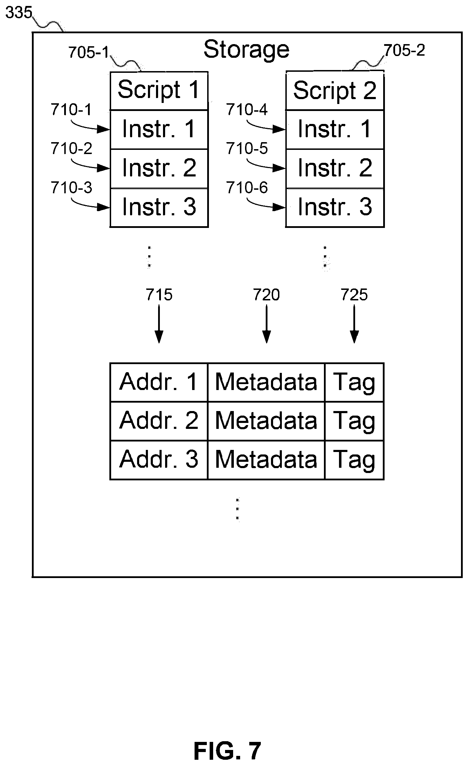

A programmable cache script may be stored in SRAM 335. That is, SRAM 335 may store one or more programmable cache scripts. SRAM 335 may also store other information, such as metadata for data cached in DRAM 305. The contents of SRAM 335 are discussed further with reference to FIG. 7 below. While FIG. 3 shows SRAM 335 being used, embodiments of the disclosure may use any other desired form of storage medium than SRAM 335: for example, another DRAM may be used (or a portion of DRAM 305 may be used to store information that would otherwise be stored in SRAM 335), or a form of non-volatile (persistent) storage may be used.

Cache core 320 may communicate with data controller 315 and SRAM 335 via bus 340. Bus 340 may be any desired fabric to connect elements within tiered storage device 120. For example, bus 340 may be an Advanced eXtensible Interface (AXI) bus. (Note that bus 340 may be a different type of bus than the bus that connects tiered storage device 120 with other components of machine 105 of FIG. 1, such as processor 110 of FIG. 1.) Bus 340 may enable cache core 320 to retrieve instructions for a cache script from SRAM 335, to send requests to data controller 315, and to receive responses from data controller 315, among other uses.

As shown in FIG. 3, tiered storage device 120 may also include other elements. For example, tiered storage device 120 may include interface 345, which may be the physical interface that connects tiered storage device 120 with other components of machine 105 of FIG. 1. For example, interface 345 might include CXL, Serial AT Attachment (SATA), mSATA, Serial Attached Small Computer Systems Interface (SCSI) (SAS), NVMe, PCIe, U.2, M.2, or Enterprise and Datacenter Standard Form Factor (EDSFF): other interfaces are also possible.

Tiered storage device 120 may also include controller 350. Controller 350 may have a function similar to a controller of a storage device: that is, communicating across interface 345. For example, controller 350 may support receiving and interpreting commands received across interface 345, and sending results across interface 345. Controller 350 may communicate with device driver 130 of FIG. 1. For example, controller 350 may be a CXL controller, to interpret commands issued using any of the CXL.mem, CXL.io, and/or CXL.cache protocols. Controller 350 may also support an application (executing on processor 110 of FIG. 1, for example) to provide a programmable cache script to cache core 320 for use with that application.

Finally, tiered storage device 120 may include timers 355. Tiered storage device 120 may include any number (one or more) of timers 355. Timers 355 may be used to synchronize operations within tiered storage device 120: for example, to ensure that operations happen according to specified clock cycles. As a specific example, cache core 320 may use timers 355 to ensure that instructions from cache scripts are executed at the correct times.

Tiered storage device 120 may also include other elements not shown in FIG. 3. For example, tiered storage device 120 may include a management core, a generalized data mining and analytics (GDMA) engine, and/or register files. In some embodiments of the disclosure, these elements might be relevant to the implementation of particular programmable cache scripts or other operations of tiered storage device 120, but will not otherwise be discussed here.

FIG. 4 shows details of cache core 320 of FIG. 3, according to embodiments of the disclosure. In FIG. 4, cache core 320 is shown. Cache core 320 may include fetch unit 405, scheduler unit 410, execution unit 415, general purpose registers 420, and thread arbitrator 425 (which may also be referred to as a thread management component or a thread manager). Fetch unit 405 may fetch instructions for a programmable cache script (or for general operations of cache core 320) from SRAM 335 of FIG. 3. Scheduler unit 410 may then schedule execution of the instructions fetched by fetch unit 405 at a particular time: for example, after a certain number of clock cycles have passed, as measured by timers 355 of FIG. 3. Execution unit 415 may then execute the instructions at the appropriate time, and may use general purpose registers 420 in executing the instructions. General purpose registers may include, for example, registers for execution of the instructions, registers for control and status, and registers for interrupts (for example, for data controller 315 of FIG. 3 to notify cache core 320 when data becomes available from DRAM 305 of FIG. 3 and/or NAND flash 310 of FIG. 3 (which might not happen at a predictable time, depending on the number of requests pending for DRAM 305 of FIG. 3 and/or NAND flash 310 of FIG. 3).

Finally, thread arbitrator 425 may be used to arbitrate among threads that might be executing on cache core 320. For example, consider the situation where the application has requested access to data that is not currently cached in DRAM 305 of FIG. 3. In that case, data controller 315 of FIG. 3 may access the data from NAND flash 310 of FIG. 3, and cache core 320 may determine whether to cache that data in DRAM 305 of FIG. 3. But to cache new data in DRAM 305 of FIG. 3 might involve evicting old data from DRAM 305 of FIG. 3 (depending on whether or not there is space available in DRAM 305 of FIG. 3 to cache the new data). As evicting data from DRAM 305 of FIG. 3 may be a different thread from normal cache management (since evicting data might occur only occasionally as data is accessed from tiered storage device 120 of FIG. 1), cache core 320 may need to switch threads to handle data eviction. Thread arbitrator 425 may also manage execution of threads of different programmable cache scripts: for example, if a single cache core 320 is performing cache management for multiple applications that are executing on processor 110 of FIG. 1 and that each are using different cache scripts (either programmable or default).

Thread arbitrator 425 may determine which thread should be executing at any particular moment (based, for example, on what operations need to be performed at that moment) and may change what thread is currently executing on cache core 320. Note that if tiered storage device 120 includes more than one cache core 320 (as shown, for example, in FIG. 3), then different threads of a programmable cache script might execute in different cache cores 320, in which case thread arbitrator 425 may be omitted: when a different thread is needed, it may be executed by a different cache core 320.

FIG. 5 shows how cache core 320 of FIG. 3 may receive a programmable cache script from an application, according to embodiments of the disclosure. In FIG. 5, application 505 is shown. Application 505 (and its user/programmer) may develop a programmable cache script: for example, using cache software development kit 510. Once developed, the programmable cache script may be provided to cache core 320 using cache driver 515. Note that cache driver 515 may be part of device driver 130 of FIG. 1, or cache driver 515 may be a separate driver.

A few additional points are worth noting. First, in some embodiments of the disclosure, the programmable cache script may be compiled into object code using a compiler, as might be included in cache software development kit 510. The (compiled) object code may then be provided to cache core 320 as the programmable cache script that may be executed by execution unit 415 of FIG. 4. In other embodiments of the disclosure, cache core 320 may include an interpreter, which may effectively compile the programmable script into object code that may be executed by execution unit 415 of FIG. 4 as each instruction is to be executed.

Second, as discussed with reference to FIG. 3 above, in some embodiments of the disclosure, each programmable cache script may be assigned an identifier. This identifier may be assigned by either application 505, by cache driver 515, or by cache core 320. If assigned by application 505, the identifier may be provided to cache core 320 as part of the command to provide the programmable cache script to cache core 320. If assigned by cache driver 515, cache driver 515 may provide the identifier to both cache core 320 and application 505. If assigned by cache core 320, cache core 320 may return the identifier to application 505 as part of a response indicating that the programmable cache script was successfully received by cache core 320.

Third, cache driver 515 may communicate with controller 350 of FIG. 3. Controller 350 of FIG. 3 may then store the programmable cache script in SRAM 335 of FIG. 3, from which cache core 320 may fetch the instructions and execute them. In this manner, if tiered storage device 120 of FIG. 1 includes multiple cache cores 320, each cache core 320 may execute the programmable cache script (or part of the programmable cache script, such as an individual thread). This fact also means that if multiple instances of application 505 are executing on processor 110 of FIG. 1 (for example, for different users), each instance of application 505 may benefit from cache core 320 executing the programmable cache script: each cache core 320 may access the instructions from SRAM 335 of FIG. 3. In addition, if one instance of application 505 has already loaded the programmable cache script into tiered storage device 120 of FIG. 1, other instances of application 505 may simply identify the programmable cache script to be executed by cache core 320 without having to load an additional copy of the programmable cache script into cache core 320. (But note that nothing prevents each instance of application 505 from sending its own copy of the programmable cache script to cache core 320, even though that approach might be less efficient in terms of time and storage in SRAM 335 of FIG. 3.)

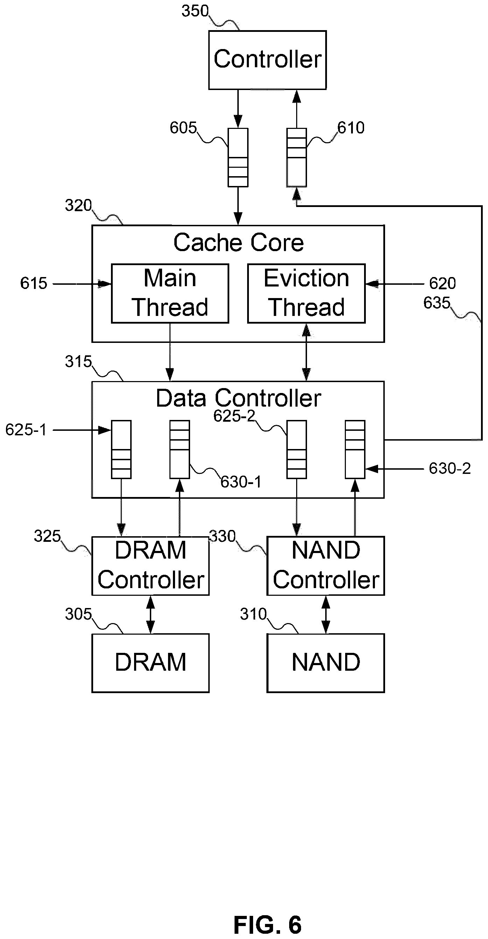

FIG. 6 shows how controller 350 of FIG. 3, cache core 320 of FIG. 3, data controller 315 of FIG. 3, and storages 305 and 310 of FIG. 3 may communicate, according to embodiments of the disclosure. In FIG. 6, controller 350 may include queues 605 and 610. In some embodiments of the disclosure, queues 605 and 610 may be stored in memory 115 of FIG. 1; in other embodiments of the disclosure, queues 605 and 610 may be in a memory of controller 350, in SRAM 335 of FIG. 3, or in another memory not shown in FIG. 3. Queue 605 may be a request queue that may be used to receive requests from application 505 of FIG. 5 (or more generally, from processor 110 of FIG. 1), whereas queue 610 may be a response queue to send a response to application 505 of FIG. 5 (or processor 110 of FIG. 1). Such responses may include, for example, completion signals or messages indicating that an access request has completed and/or data (for example, in response to a request to read data from tiered storage device 120 of FIG. 1). Controller 350 may receive requests from application 505 of FIG. 5 (or processor 110 of FIG. 1) and may place the requests in request queue 605.

Cache core 320 may then retrieve a request from request queue 605 to process the request. Main thread 615 may be responsible for overall cache management according to a cache script (either programmable or default), and eviction thread 620 may be responsible for handling eviction of data from DRAM 305. Typically, requests are initially processed using main thread 615, with eviction thread 620 invoked as needed.

Cache core 320 may determine whether or not the data in question is currently cached in DRAM 305. Cache core 320 may make this determination using metadata or other information, which may be stored in SRAM 335 of FIG. 3. This metadata is discussed further with reference to FIG. 7 below.

Cache core 320 may then issue requests to data controller 315. Cache core 320 may indicate as part of the request whether the request in question should be directed to DRAM 305 or to NAND flash 310, depending on the type of request and whether or not the data is currently cached in DRAM 305. For example, if the data is currently cached in DRAM 305, read, write, or delete requests may be directed to DRAM 305, and if the data is not currently cached in DRAM 305, then read, write, or delete requests may be directed to NAND flash 310.

Data controller 315 may then place the request in request queues 625-1 and/or 625-2, depending on whether the data access request involves DRAM 305 and/or NAND flash 310 (request queues 625-1 and 625-2 may be referred to collectively as request queues 625). For example, if the data being read or deleted is already cached in DRAM 305, or if the request is to write new data, the request may be placed in request queue 625-1, whereas if the data to be read or deleted is in NAND flash 310, then the request may be placed in request queue 625-2 (note that if the request is to delete data that is both stored in NAND flash 310 and cached in DRAM 305, then requests may be placed in both request queues 625-1 and 625-2).

DRAM controller 325 may access requests from request queue 625-1, and may process them using DRAM 305. Similarly, NAND controller 330 may access requests from request queue 625-2 and may process them using NAND flash 310. DRAM controller 325 may return responses to data controller 315 using response queue 630-1, and NAND controller 330 may return responses to data controller 325 using response queue 630-2 (response queues 630-1 and 630-2 may be referred to collectively as response queues 630). Data controller 315 may then inform cache core 320 that processing by storages 305 and/or 310 is complete. In some situations, this notification may involve issuing an interrupt to cache controller 320. For example, if the request involved reading data from NAND flash 310, cache core 320 may determine that the data should also be cached in DRAM 305, in which eviction of existing data may be necessary (using eviction thread 620), and data controller 315 may issue an interrupt to cache core 320 to inform cache core 320 that it is time to handle data eviction from DRAM 305.

Data controller 315 may also issue a completion signal or message back to application 505 of FIG. 5 (or processor 110 of FIG. 1) using response queue 610, as shown by line 635. Data controller 315 may also send data back to application 505 of FIG. 5 (or processor 110 of FIG. 1) via response queue 610, if the request was to read data from tiered storage device 120 of FIG. 1.

FIG. 7 shows information that may be stored in SRAM 335 of FIG. 3, according to embodiments of the disclosure. In FIG. 7, SRAM 335 is shown. SRAM 335 is shown as including cache scripts 705-1 and 705-2 (which may be referred to collectively as cache scripts 705). Note that cache scripts 705 might be programmable cache scripts associated with applications 505 of FIG. 5, or cache scripts 705 might be pre-programmed into tiered storage device 120 of FIG. 1 (which may include a default cache script).

Cache scripts 705 may include one or more instructions, such as instructions 710-1 through 710-6 (which may be referred to collectively as instructions 710). Instructions 710 may be organized into threads within each cache script 705. Instructions 710 may be fetched as needed by fetch unit 405 of FIG. 4 for execution by execution unit 415 of FIG. 4.

SRAM 335 may also include information about what data is cached in DRAM 305 of FIG. 3. For example, SRAM 335 may store information about addresses 715, metadata 720 for addresses 715, and tag 725 for addresses 715. For example, addresses 715 may be addresses of data that may be accessed by application 505 of FIG. 5: for example, the address provided by application 505 of FIG. 5 in the request. Metadata 720 may be information about access of the data at addresses 715 by application 505 of FIG. 5. Metadata 720 may include, for example, the address in DRAM 305 of FIG. 3 where the data is currently cached, access counts for the data, information about when the data was accessed (either most recently or more generally over some or all of the history of the execution of application 505 of FIG. 5), and information about whether the data as stored in DRAM 305 of FIG. 3 is currently clean or dirty (that is, whether the data has been updated by application 505 of FIG. 5 since the data was copied from NAND flash 310 of FIG. 3 into DRAM 305 of FIG. 3, which may indicate the need to write the updated data back to NAND flash 310 of FIG. 3 when the data is evicted from DRAM 305 of FIG. 3). Note that how metadata 720 is updated may depend on cache script 705: different cache scripts 705 may consider different information relevant in determining when to evict data from DRAM 305 of FIG. 3, and therefore different information may be stored as metadata 720.

While the ideal situation might be to store information about every individual address of data in tiered storage device 120 of FIG. 1, practically SRAM 335 might not have enough capacity to store all that information. Thus, in some embodiments of the disclosure, addresses 715 might represent some chunk of data (for example, a page, a block, or a superblock as stored on NAND flash 310 of FIG. 3) rather than a specific individual address. But since DRAM 305 of FIG. 3 may store data in smaller units than the chunks than NAND flash 310 of FIG. 3, it might happen that not every address from that chunk as stored on NAND flash 310 of FIG. 3 is necessarily copied into DRAM 305 of FIG. 3. Thus, tag 725 may be used to identify whether particular addresses within the range represented by address 715 are cached in DRAM 305 of FIG. 3. For example, if addresses 715 each represent 4 kilobytes (KB) of data, 4096 bits, or 512 bytes, may be used as tags to represent the individual addresses within that address range. And if DRAM 305 of FIG. 3 may store data in units larger than individual bytes, then the number of bits needed to represent tag 725 for each address in the range may be fewer than 4096. For example, if DRAM 305 of FIG. 3 caches data in units of 64 bytes each, then there are 64 such units (64 × 64 = 4096), and only 64 bits, or 8 bytes, may be needed to represent these 64 units. Then, to determine whether a particular address is cached in DRAM 305 of FIG. 3, cache core 320 of FIG. 3 may determine the address being requested, check to see if that address range is currently cached in DRAM 305 of FIG. 3 using address 715 and metadata 720, and then check if the bit corresponding to the desired address in tag 725 is set to determine if the target data is actually cached in DRAM 305 of FIG. 3.

While FIG. 7 suggests that the metadata information is stored in SRAM 335, embodiments of the disclosure may store the metadata information in any desired location. For example, the metadata information might be stored in NAND flash 310 of FIG. 3 (and cached in DRAM 305 of FIG. 3), or just stored in DRAM 305 of FIG. 3. The former allows for metadata information to be tracked even if machine 105 of FIG. 1 is powered down periodically, whereas the latter may be used if only current information is needed (and not information from before machine 105 of FIG. 1 was last powered down). The metadata information may also be stored in another storage not shown in FIG. 3.

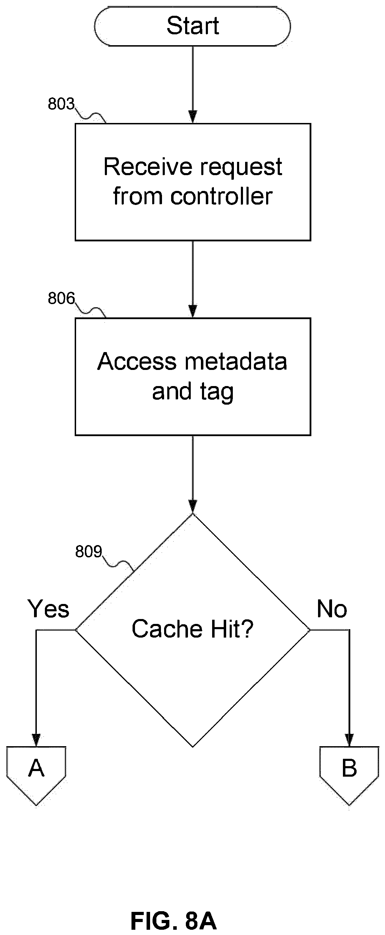

FIGs. 8A-8E show a flowchart of an example procedure for tiered storage device 120 of FIG. 1 to perform cache management, according to embodiments of the disclosure. In FIG. 8A, at block 803, cache core 320 of FIG. 3 may receive a request (originally from application 505 or processor 110 of FIG. 1) from controller 350 of FIG. 3. At block 806, cache core 320 of FIG. 3 may access metadata 720 and/or tag 725 of FIG. 7 from storage 335 of FIG. 3 for the address of the data being accessed. At block 809, cache core 320 of FIG. 3 may determine whether the data being accessed is currently cached in DRAM 305 or not.

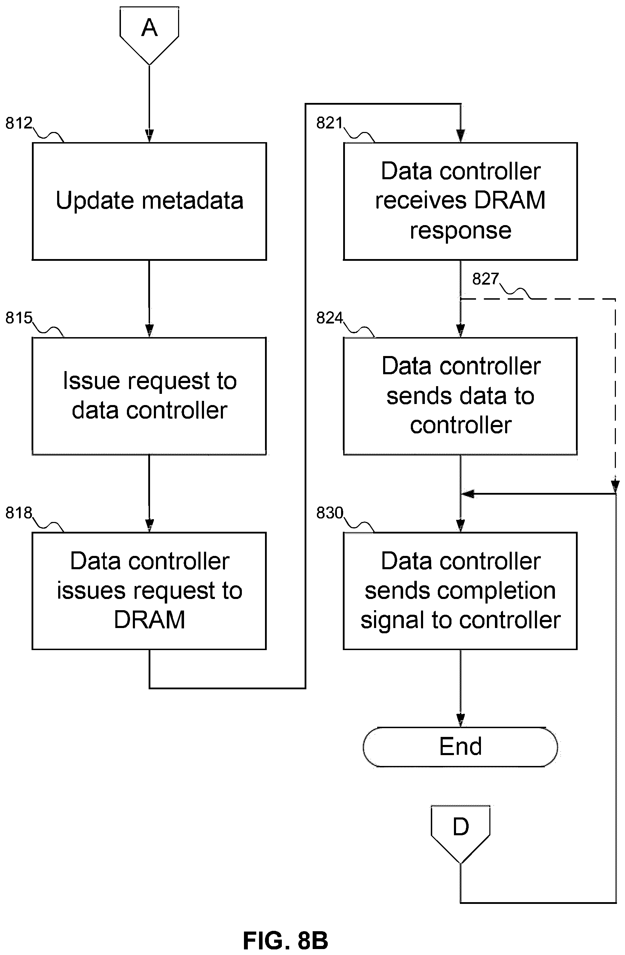

If the data is currently cached in DRAM 305 of FIG. 3, then at block 812 (FIG. 8B), cache core 320 of FIG. 3 may update metadata 720 of FIG. 7: for example, to increment the access count for the address, to update the time of last access of the data, or to set a flag indicating that the data is dirty (if the data was written by application 505 or processor 110 of FIG. 1). Note that since metadata 720 of FIG. 7 used by cache script 705 of FIG. 7 may vary with cache script 705 of FIG. 7, how metadata 720 of FIG. 7 is updated may be a function of cache script 705 of FIG. 7 itself rather than being implemented in a specific and particular manner for all data cached in DRAM 305 of FIG. 3.

At block 815, cache core 320 of FIG. 3 may issue a request to data controller 315 of FIG. 3 to access the data from DRAM 305 of FIG. 3. At block 818, data controller 315 of FIG. 3 may issue a request to DRAM controller 325 of FIG. 3. At block 821, data controller 315 of FIG. 3 may receive a response from DRAM controller 325 of FIG. 3. At block 824, data controller 315 of FIG. 3 may send the data to controller 350 of FIG. 3. As sending the data might only happen in the case where the original request from application 505 or processor 110 of FIG. 1 was a read request, block 824 may be omitted, as shown by dashed line 827. Finally, at block 830, data controller 315 of FIG. 3 may send a completion signal or message to controller 350, and processing of that request from application 505 of FIG. 5 (or processor 110 of FIG. 1).

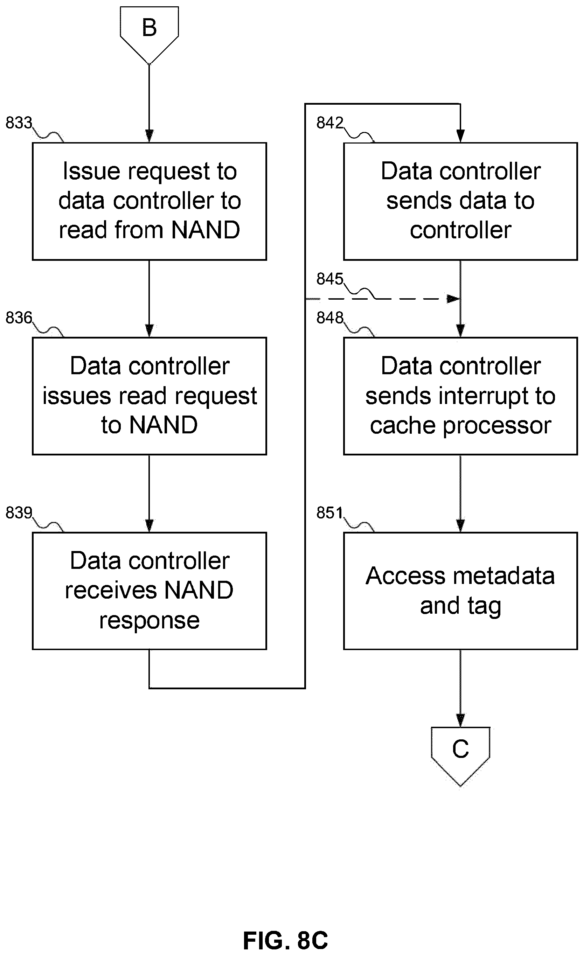

If the data is not currently cached in DRAM 305 of FIG. 3, then at block 833 (FIG. 8C), cache core 320 of FIG. 3 may issue a request to data controller 315 of FIG. 3 to read the data from NAND flash 310 of FIG. 3. Cache core 320 of FIG. 3 may also push eviction thread 620 of FIG. 6 onto a stack for later execution when data controller 315 of FIG. 3 has completed the read of the data from NAND flash 310 of FIG. 3, as it may be necessary to evict some data from DRAM 305 of FIG. 3 to cache the data read from NAND flash 310 of FIG. 3. At block 836, data controller 315 of FIG. 3 may issue a read request to NAND controller 330 of FIG. 3. At block 839, data controller 315 of FIG. 3 may receive a response from NAND controller 330 of FIG. 3. At block 842, data controller 315 of FIG. 3 may send the data to controller 350 of FIG. 3. As sending the data might only happen in the case where the original request from application 505 or processor 110 of FIG. 1 was a read request, block 842 may be omitted, as shown by dashed line 845. At block 848, data controller 315 of FIG. 3 may send an interrupt to cache core 320 of FIG. 3 so that cache core 320 of FIG. 3 may determine if data needs to be evicted from DRAM 305 of FIG. 3.

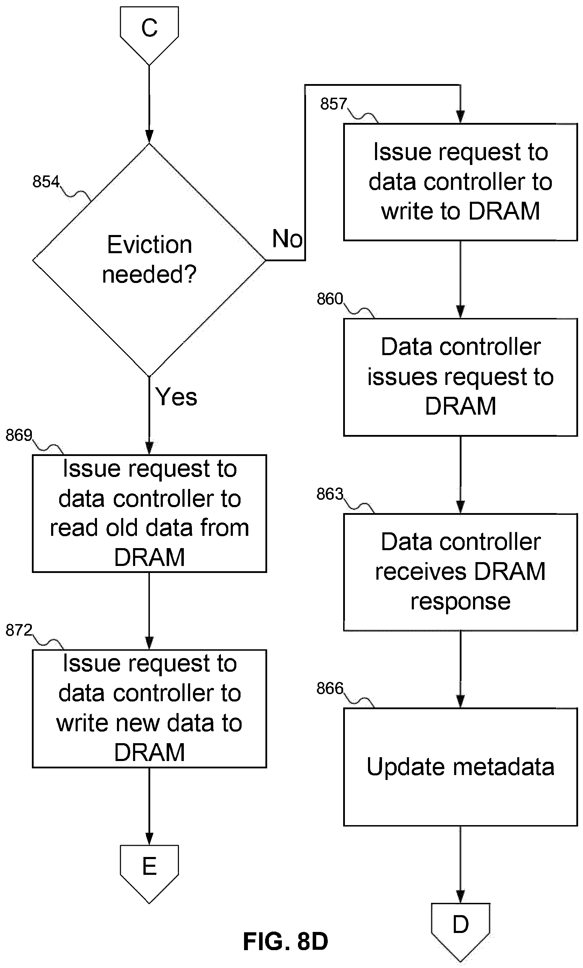

At block 851, cache core 320 of FIG. 3 may access metadata 720 and tags 725 of FIG. 7 to determine how full DRAM 305 of FIG. 3. At block 854 (FIG. 8D), cache core 320 of FIG. 3 determines if data should be evicted from DRAM 305 of FIG. 3. Note that like what metadata 720 of FIG. 7 is tracked, whether any data should be evicted from DRAM 305 of FIG. 3 may depend on cache script 705 of FIG. 7, as may how data is selected for eviction from DRAM 305 of FIG. 3. If there is no need to evict any data from DRAM 305 of FIG. 3, then at block 857, cache core 320 of FIG. 3 may issue a request to data controller 315 of FIG. 3 to write the data to DRAM 305 of FIG. 3. At block 860, data controller 315 of FIG. 3 may issue a request to DRAM controller 325 of FIG. 3 to write the data to DRAM 305 of FIG. 3 At block 863, data controller 315 of FIG. 3 may receive a response from DRAM controller 325 of FIG. 3 that the data was written to DRAM 305, and at block 866, cache core 320 of FIG. 3 may update metadata 720 and/or tag 725 of FIG. 7 in storage 335 of FIG. 3 (to reflect the inclusion of the new data in DRAM 305 of FIG. 3), after which processing may return to block 830 of FIG. 8B.

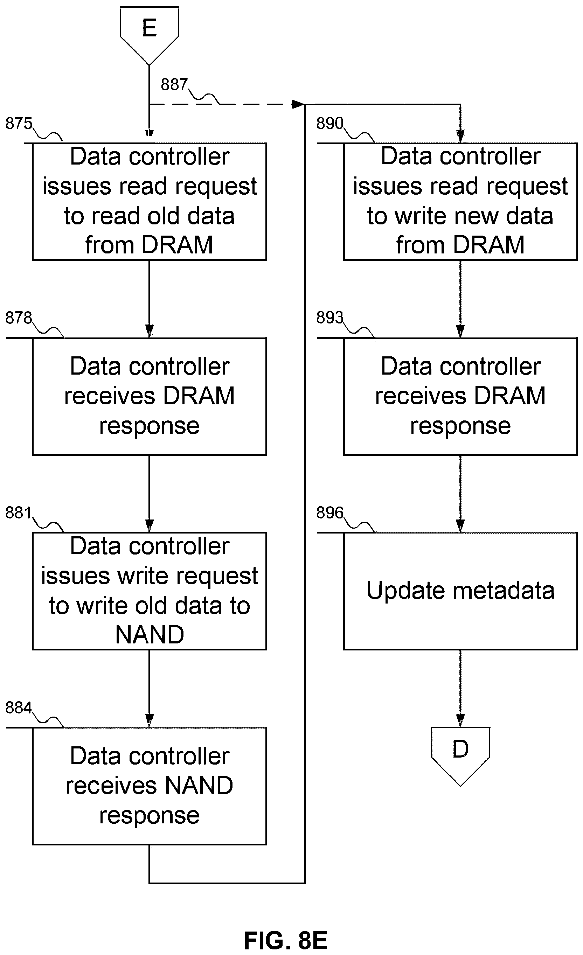

If data is to be evicted from DRAM 305 of FIG. 3, then cache core 320 of FIG. 3 may use metadata 720 and tags 725 of FIG. 7 to determine what data to evict from DRAM 305 of FIG. 3. At block 869, cache core 320 of FIG. 3 may issue a request to data controller 315 of FIG. 3 to read data from DRAM 305 of FIG. 3 that is to be evicted from DRAM 305, and at block 872, cache core 320 of FIG. 3 may issue another request to write the new data to DRAM 305 of FIG. 3. At block 875 (FIG. 8E), data controller 315 of FIG. 3 may issue a request to DRAM controller 325 of FIG. 3 to read the old data from DRAM 305 of FIG. 3. At block 878, data controller 315 of FIG. 3 may receive a response from DRAM controller 325 of FIG. 3 (including the data read from DRAM 305 of FIG. 3). At block 881, data controller 315 of FIG. 3 may issue a request to NAND controller 330 of FIG. 3 to write the old data to NAND flash 310 of FIG. 3. At block 884, data controller 315 of FIG. 3 may receive a response from NAND controller 330 of FIG. 3. Note that if the old data in DRAM 305 of FIG. 3 is clean (that is, the data has not been updated in DRAM 305 of FIG. 3 relative to the data as previously stored in NAND flash 310 of FIG. 3), then blocks 875, 878, 881, and 884 may be omitted, as shown by dashed line 887. At block 890, data controller 315 of FIG. 3 may issue a request to DRAM controller 325 of FIG. 3 to write the new data to DRAM 305 of FIG. 3. At block 893, data controller 315 of FIG. 3 may receive a response from DRAM controller 325 of FIG. 3. At block 896, cache core 320 of FIG. 3 may update metadata 720 and/or tag 725 of FIG. 7 in storage 335 of FIG. 3 (to reflect both the inclusion of the new data in DRAM 305 and the eviction of the old data from DRAM 305 of FIG. 3), after which processing may return to block 830 of FIG. 8B.

Note that there may be some cases in which the above flow might be modified. For example, consider the situation where application 505 of FIG. 5 (or processor 110 of FIG. 1) issues a request to update existing data on NAND flash 310 of FIG. 3, but does not necessarily write the entire page (assuming that a page is the smallest unit that may be written to NAND flash 310 of FIG. 3: if the smallest unit that may be written is different from a page, the example may be appropriately modified). Since application 505 of FIG. 5 (or processor 110 of FIG. 1) is only updating a part of the page, if that page is not currently cached in DRAM 305 of FIG. 3, cache core 320 of FIG. 3 may need to read the rest of the page from NAND flash 310 of FIG. 3 to appropriately complete the write request from application 505 of FIG. 5 (or processor 110 of FIG. 1). Thus, even though application 505 of FIG. 5 (or processor 110 of FIG. 1) has issued a write request, some data might still be read from NAND flash 310 of FIG. 3 in order to complete the write request.

Another case where the above flow might be modified is where application 505 of FIG. 5 (or processor 110 of FIG. 1) issues a request to write entirely new data to tiered storage device 120 of FIG. 1. In that case, the data in question would not already be in DRAM 305 of FIG. 3, but neither would it be necessary to read the data from NAND flash 310 of FIG. 3 as described in blocks 833 through 842 of FIG. 8C: the only question is whether any data in DRAM 305 of FIG. 3 needs to be evicted from DRAM 305 of FIG. 3 before the new data is written to DRAM 305 of FIG. 3.

Finally, the above flow does not describe how dirty data is handled (beyond setting a flag indicating that the data is dirty). In some embodiments of the disclosure, cache script 705 of FIG. 7 (either programmable or pre-programmed) might include a thread that handles flushing dirty data from DRAM 305 of FIG. 3 to NAND flash 310 of FIG. 3 to avoid the risk of data loss due to an unexpected power interruption. For example, cache core 320 of FIG. 3 might determine that activity in tiered storage device 120 of FIG. 1 is currently low (there are few or no requests pending from application 505 or processor 110 of FIG. 1), and may activate a thread in cache script 705 of FIG. 7 responsible for flushing dirty data from DRAM 305 of FIG. 3 to NAND flash 310 of FIG. 3. This thread may examine metadata 720 of FIG. 7 in storage 335 of FIG. 3, identify data is flagged as dirty, and issue the appropriate requests to data controller 315 of FIG. 3 to read the dirty data from DRAM 305 and to write the dirty data to NAND flash 310 of FIG. 3. The thread may then reset the dirty flag to indicate that the data is now clean. Note that this thread does not necessarily result in any data being evicted from DRAM 305 of FIG. 3, merely that dirty data is flushed to NAND flash 310 of FIG. 3 for persistent storage.

Cache script 705 of FIG. 7 might also include threads to manage pre-fetching of data from NAND flash 310 of FIG. 3 into DRAM 305 of FIG. 3, which may operate based on the expected workflow of application 505 of FIG. 5 (or processor 110 of FIG. 1), and to evict data from DRAM 305 of FIG. 3 that is no longer expected to be used. That is, cache script 705 of FIG. 7 might not limit fetching of data to situations where the data is actually requested by application 505 of FIG. 5 (or processor 110 of FIG. 1), and/or might not evict data from DRAM 305 of FIG. 3 only when space is needed for new data being fetched from NAND flash 310 of FIG. 3. Again, since the eviction and pre-fetching of data may depend on how application 505 of FIG. 5 (or processor 110 of FIG. 1) accesses data, the exact determination of what data to pre-fetch or to evict may depend on application 505 of FIG. 5 (or processor 110 of FIG. 1), and may vary depending on cache script 705 of FIG. 7 being executed.

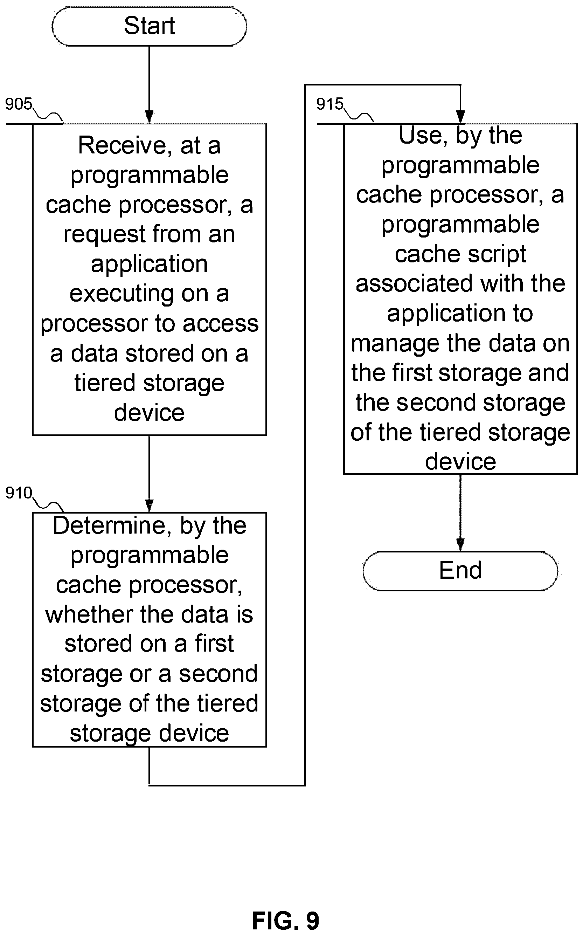

FIG. 9 shows a flowchart of an example procedure for cache core 320 of FIG. 3 to perform cache management in tiered storage device 120 of FIG. 1, according to embodiments of the disclosure. In FIG. 9, at block 905, cache core 320 may receive a request from application 505 to access data from tiered storage device 120. At block 910, cache core 320 may determine whether the data is stored on DRAM 305 or NAND flash 310 (and could potentially be on both). Finally, at block 915, cache core 320 may use programmable cache script 705 to manage the caching of the data being accessed in DRAM 305.

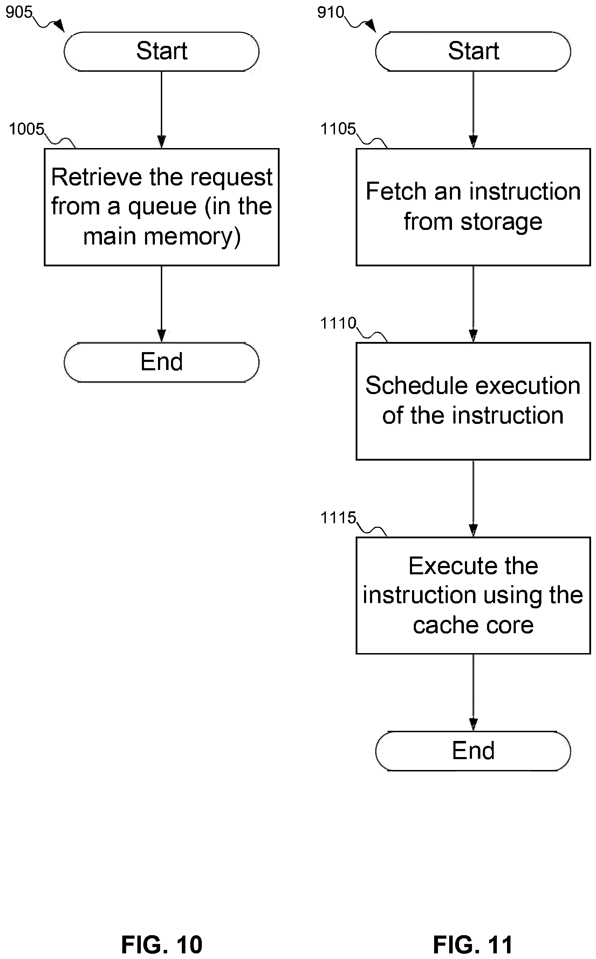

FIG. 10 shows a flowchart of an example procedure for cache core 320 of FIG. 3 to receive a request from application 505 of FIG. 5, according to embodiments of the disclosure. In FIG. 10, at block 1005, cache core 320 may retrieve the request from request queue 605 (which may be in controller 350, in a memory associated with tiered storage device 120, or in memory 115).

FIG. 11 shows a flowchart of an example procedure for cache core 320 of FIG. 3 to execute an instruction from programmable cache script 705 of FIG. 7, according to embodiments of the disclosure. In FIG. 11, at block 1105, fetch unit 405 may fetch instruction 710 from SRAM 335. At block 1110, scheduler unit 410 may schedule the execution of instruction 710. At block 1115, execution unit 415 may execute instruction 710 (at the scheduled time).

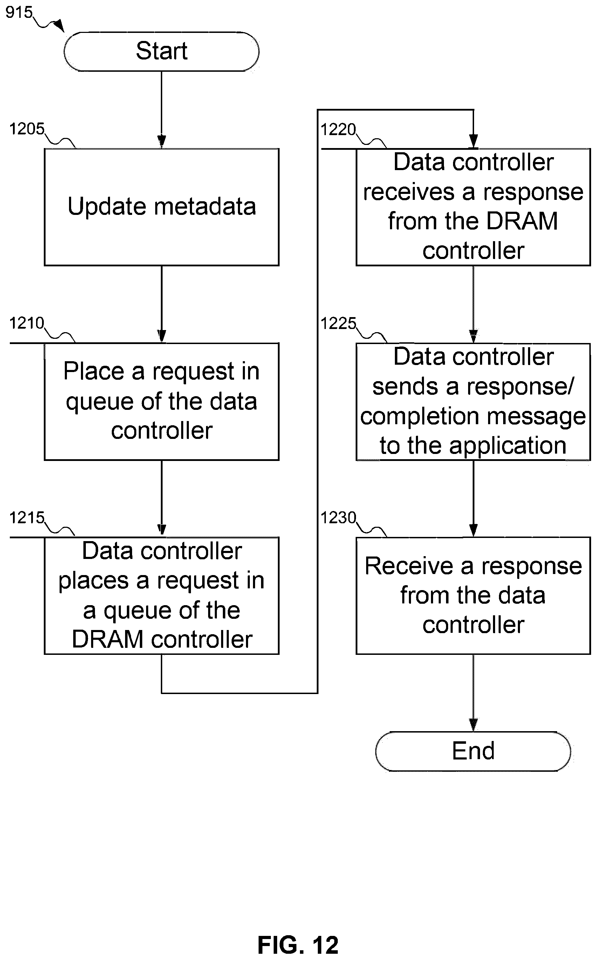

FIG. 12 shows a flowchart of an example procedure to manage a cache hit in tiered storage device 120 of FIG. 1, according to embodiments of the disclosure. In FIG. 12, at block 1205, cache core 320 may update metadata 720 (and potentially tag 725 as well), based on the data access request originally issued by application 505 (or processor 110). At block 1210, cache core 320 may issue a request to data controller 315 to access the data from DRAM 305. For example, cache core 320 may place a request in a queue of data controller 315. At block 1215, data controller 315 may issue a request (for example, by placing a request in a queue such as request queue 625-1) for DRAM controller 325. At block 1220, data controller 325 may receive a response from DRAM controller 325 (for example, through response queue 630-1). At block 1225, data controller 315 may send a completion signal or message to application 505 (or processor 110): for example, using response queue 610. Finally, at block 1230, cache core 320 may receive a response from data controller 315 regarding the data access request.

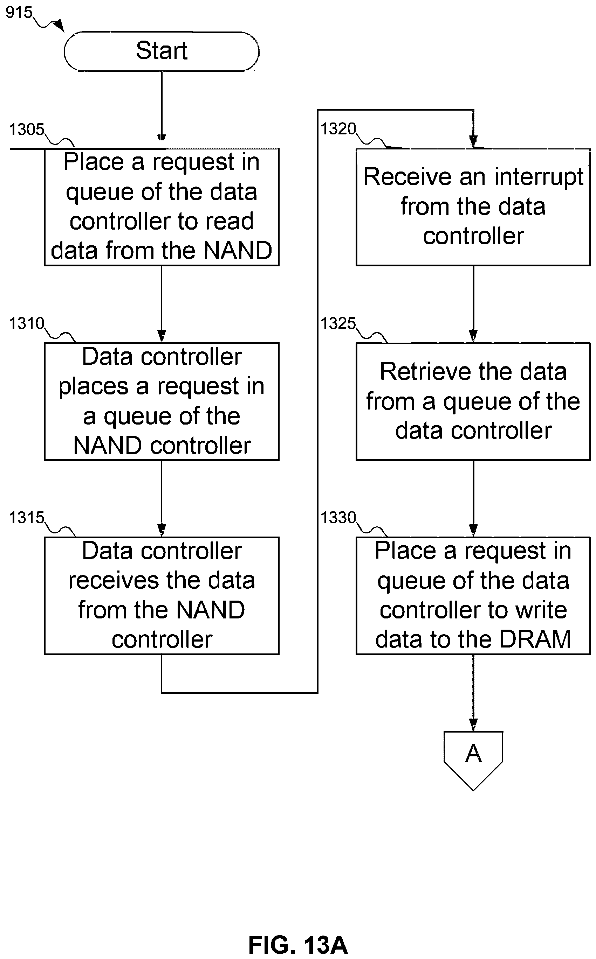

FIGs. 13A-13B show a flowchart of an example procedure to manage a cache miss in tiered storage device 120 of FIG. 1, according to embodiments of the disclosure. In FIG. 13A, at block 1305, cache core 320 may issue a request to data controller 315 to read the data from NAND flash 310. For example, cache core 320 may place a request in a queue of data controller 315. At block 1310, data controller 315 may issue a request (for example, by placing a request in a queue such as request queue 625-2) for NAND controller 330 to read the data from NAND flash 310. At block 1315, data controller 315 may receive a response from NAND controller 330 (for example, through response queue 630-2), which may include the data read from NAND flash 310.

At block 1320, cache core 320 may receive an interrupt from data controller 315 that the data from NAND flash 310 is now available (and that data eviction from DRAM 305 may be necessary). At block 1325, cache core 320 may retrieve the response from the data controller 315, that may include the data read from NAND flash 310. For example, cache core 320 may retrieve the response from a queue of data controller 315. At block 1330, cache core 320 may issue a request to data controller 315 to write the data, read from NAND flash 310, to DRAM 305.

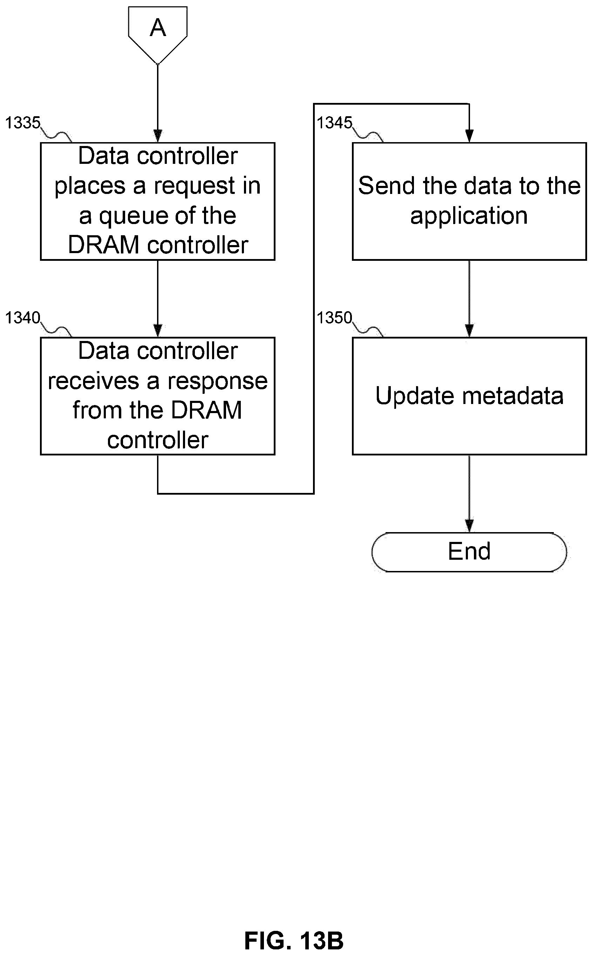

At block 1335 (FIG. 13B), data controller 315 may issue a request (for example, by placing a request in a queue such as request queue 625-1) for DRAM controller 325 to write the data to DRAM 305. At block 1340, data controller 325 may receive a response from DRAM controller 330 (for example, through response queue 630-2), which may include the data read from NAND flash 310. At block 1345, data controller 315 may send the data to application 505 (or processor 110). Finally, at block 1350, cache core 320 may update metadata 720 to reflect that the data is now cached in DRAM 305.

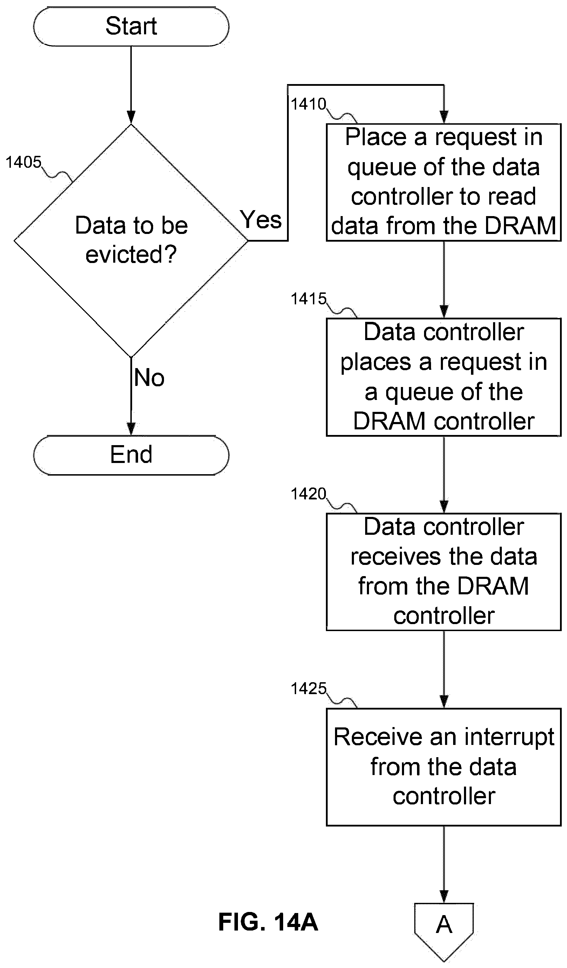

FIGs. 14A-14B show a flowchart of an example procedure to manage evicting data from DRAM 305 of FIG. 3 in tiered storage device 120 of FIG. 1, according to embodiments of the disclosure. In FIG. 14A, at block 1405, cache core 320 may determine whether data is to be evicted from DRAM 305. If no data is to be evicted from DRAM 305, then processing is complete. Otherwise, at block 1410, cache core 320 may issue a request to data controller 315 to read the data to be evicted from DRAM 305. For example, cache core 320 may place a request in a queue of data controller 315. Cache core 320 may also push eviction thread 620 into the stack for later execution when the data being evicted from DRAM 305 has been read from DRAM 305. At block 1415, data controller 315 may issue a request (for example, by placing a request in a queue such as request queue 625-1) for DRAM controller 325 to read the data from DRAM 305. At block 1420, data controller 315 may receive a response (for example, through response queue 630-1), which may include the data read from DRAM 305.

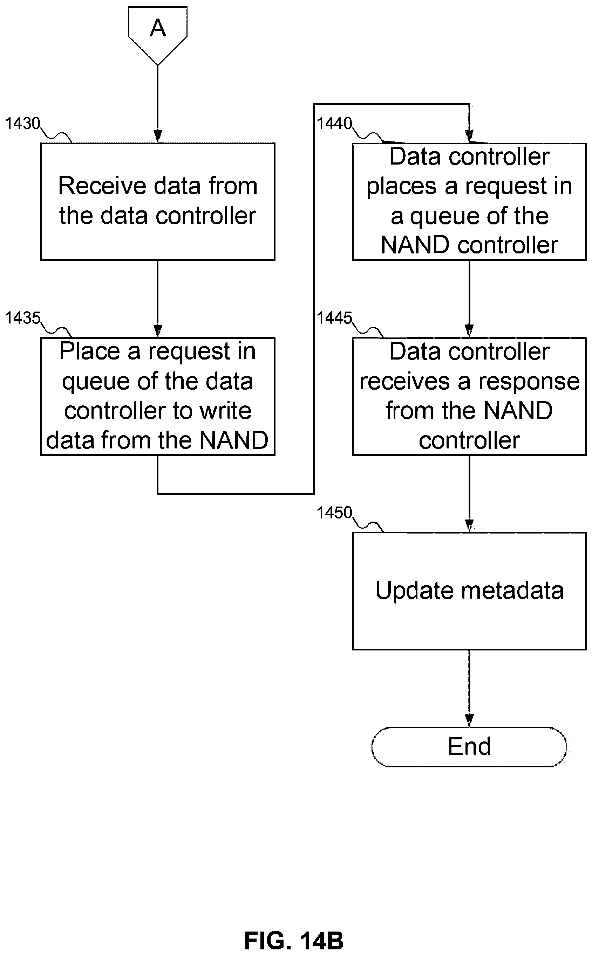

At block 1425, cache core 320 may receive an interrupt from data controller 315, which may indicate that the old data being evicted from DRAM 305 has been read from DRAM 305. At block 1430 (FIG. 14B), cache core 320 may receive from data controller 315 the old data being evicted from DRAM 305. At block 1435, cache core 320 may issue a request to data controller 315 to write the old data to NAND flash 310. For example, cache core 320 may place a request in a queue of data controller 315. At block 1440, data controller 315 may issue a request (for example, by placing a request in a queue such as request queue 625-2) for NAND controller 330 to write the old data, being evicted from DRAM 305, to NAND flash 310. At block 1445, data controller 315 may receive a response from NAND controller 330 (for example, through response queue 630-2), after which processing is complete. Finally, at block 1450, cache core 320 may update metadata 720 to reflect that the data is now cached in DRAM 305 and that old data has been evicted from DRAM 305.

In FIGs. 8A-14B, some embodiments of the disclosure are shown. But a person skilled in the art will recognize that other embodiments of the disclosure are also possible, by changing the order of the blocks, by omitting blocks, or by including links not shown in the drawings. All such variations of the flowcharts are considered to be embodiments of the disclosure, whether expressly described or not.

The invention includes a programmable cache processor. The programmable cache processor executes a cache script programmed to perform cache management of data for a particular application. By enabling each application to provide its own programmable cache script, cache management may be optimized for each application individually, offering a technical advantage over using a one-size-fits-all approach to cache management.

Device Dynamic Random Access Memory (DRAM) cache may be a mandatory module for tiered memory devices. The device DRAM cache can hide the latency associated with accessing slow media such as NAND. DRAM cache performance is highly related to workload characterization, cache parameters, cache eviction algorithms, etc. Currently, a DRAM cache may use a fixed cache algorithm (e.g., Least Recently Used (LRU)) or a limited cache parameter adjusting algorithm.

There may be limited flexibility in the replacement policy. The DRAM cache may be unable to be reconfigured during runtime. A fixed DRAM cache may show performance gain limited to certain workloads/applications. However, users cannot adjust the cache algorithms based on their workload characterization.

According to some embodiments of the disclosure, a user programmable cache processor may be introduced. In some embodiments, a device DRAM cache engine for Compute Express Link (CXL)-tiered memory device may be extended for other devices that need a cache engine to improve its performance. In some embodiments, a fully programmable cache processor core may be used. In some embodiments, a cache control processor may include a center processing unit of device cache, a set of instruction sets to support various cache algorithms, and command set micro codes.

In some embodiments, a fully programmable cache processor may be used. In some embodiments, users can program different cache algorithms based on workload/application characterization to achieve optimized cache performance. In some embodiments, different cache algorithms can be programmed with cache processor instruction sets and downloaded to device command memory. In some embodiments, a CXL-tiered memory device can be expanded to support broad applications with optimized performance.

In some embodiments, a system may include a fully programmable cache processor core. In some embodiments, the system may include a cache control processor. The cache control processor may include a center processing unit of device cache, a set of instruction sets to support various cache algorithms, and command set micro codes. In some embodiments, the system may include cache command memory. The cache command memory may include user programmed scripts based on cache instruction sets. In some embodiments, the system may include general purpose registers (GPRs). The GPRs may include control registers/status registers/Interrupt registers. In some embodiments, the system may include a command fetch unit. The command fetch unit may be configured to fetch cache commands from command memory for processing. In some embodiments, the system may include an execution unit. The execution unit may be configured to execute cache instructions. In some embodiments, the system may include a schedule unit. The schedule unit may be configured to prepare data in a register and schedule instructions for a processor. In some embodiments, the system may include a data controller. The data controller may be configured to perform DRAM/NAND read/write operations, and send a response/require to a cache processor and/or CXL controller. In some embodiments, the system may include a cache thread arbitrator to support multiple threads. In some embodiments, the thread arbitrator can be ignored with two cores cache processor: one core for main thread and the other core for cache miss processing.

In some embodiments, the cache processor architecture may include a cache processor interface. The cache processor interface may include a mem req queue and data controller. In some embodiments, mem read/write requests may feed to the cache processor. In some embodiments, the cache processor may fetch cache instructions and process the instructions. The data controller may receive DRAM/NAND read/write requests from the cache processor and respond the status to the cache processor.

In some embodiments, two threads may run in one cache core. In some embodiments, the main thread may take care of all incoming requests from CXL mem request queues and send NAND/DRAM read/write commands to the data controller. In some embodiments, the eviction thread may respond to requests from the data controller, trigger an eviction routine, and complete eviction and send commands to the data controller. In some embodiments, there may be a thread arbitrator for one core cache processor.

In some embodiments, for two core cache processors, a thread arbitrator may not be needed with one core running the main thread and the other core running the eviction thread.

In some embodiments, a read/write request may be received from a memory request queue. Cache meta data may be read, and a tag check may be performed to get a cache hit status. A DRAM read/write request may be sent to the data controller. In some embodiments, an eviction/dirty status may be updated. In some embodiments, the cache processor may return to the entry point of the cache processor routine to process the next request. In some embodiments, the data controller may issue a DRAM read/write operation. The Data controller may receive a DRAM read/write response and send a completion signal along with data for read cases to the mem response queue. In some embodiments, a CXL.mem controller may send a response to the host. In some embodiments, it may take about 3 clock cycles for cache processor.

In some embodiments, a NAND read request may be sent to the data controller. In some embodiments an eviction processing routine may be pushed into the stack and the cache processor may return to the entry point. In some embodiments, the data controller may send a NAND read request to the NAND controller. In some embodiments, the data controller may receive a NAND read response and send an interrupt to the cache processor and send data to the mem read response queue in a read case. In some embodiments, the cache processor may receive an interrupt, push a current routine to the stack, pop an eviction routine out from the stack, and process the eviction routine. In some embodiments, meta data may be read, and eviction may be checked. In some embodiments, where there is no eviction, the cache processor may send a DRAM write request to the data controller. In some embodiments, the cache processor may end eviction routine and pop out routine in the stack. In some embodiments, the data controller may send a DRAM write request to the DRAM controller. In some embodiments, the data controller may receive a response from the DRAM controller and send a completion signal to the mem response queue. In some embodiments, a CXL.mem controller may send a response to a host.

In some embodiments, the cache processor may send a DRAM read request to the data controller. In some embodiments, the cache processor may send a DRAM write request to the data controller. In some embodiments, the cache processor may end the eviction routine and pop out cache routine in stack. In some embodiments, the data controller may send a DRAM read request to a DRAM controller and data to a mem response queue for mem read cases. In some embodiments, the data controller may send a DRAM write request to the DRAM controller. In some embodiments, when the data controller receives DRAM controller response for a DRAM read, it may send a NAND write request to a NAND controller and receive a NAND write response from the NAND controller. In some embodiments, the data controller may receive a DRAM controller response for a DRAM write. In some embodiments, the data controller may receive both response and send completion signals to the mem response queue. In some embodiments, a CXL.mem controller may send a response to a host.

In some embodiments, a fully programmable cache processor may be used. In some embodiments, users can program different cache algorithms based on workload/application characterization to achieve optimized cache performance. In some embodiments, different cache algorithms can be programmed with cache processor instruction sets and downloaded to device command memory. In some embodiments, with the cache processor, CXL tiered memory devices can be expanded to support broad applications with optimized performance.

In some embodiments, a fully programmable cache processor core may be included. In some embodiments, a cache control processor may include the center processing unit of device cache, a set of instruction sets to support various cache algorithms, and command set micro codes. In some embodiments, cache command memory with user programmed scripts based on cache instruction sets may be included. In some embodiments, General Purpose Registers (GPR) and Control Registers/Status Registers/Interrupt Registers may be included. In some embodiments, a command fetch unit to fetch cache command from command memory for processing may be included. In some embodiments, an execution unit to execute cache instructions may be included. In some embodiments, a schedule unit to prepare data in register and schedule instruction for processor may be included. In some embodiments, a data controller and its interface with the cache processor may be included. The data controller may perform DRAM/NAND read/write operations and response/require to the cache processor and/or CXL controller. In some embodiments, a cache thread arbitrator to support multiple threads may be included. In some embodiments, the thread arbitrator can be ignored with two cores cache processor: one core for main thread and the other core for cache miss processing.

The following discussion is intended to provide a brief, general description of a suitable machine or machines in which certain aspects of the disclosure may be implemented. The machine or machines may be controlled, at least in part, by input from conventional input devices, such as keyboards, mice, etc., as well as by directives received from another machine, interaction with a virtual reality (VR) environment, biometric feedback, or other input signal. As used herein, the term "machine" is intended to broadly encompass a single machine, a virtual machine, or a system of communicatively coupled machines, virtual machines, or devices operating together. Exemplary machines include computing devices such as personal computers, workstations, servers, portable computers, handheld devices, telephones, tablets, etc., as well as transportation devices, such as private or public transportation, e.g., automobiles, trains, cabs, etc.

The machine or machines may include embedded controllers, such as programmable or non-programmable logic devices or arrays, Application Specific Integrated Circuits (ASICs), embedded computers, smart cards, and the like. The machine or machines may utilize one or more connections to one or more remote machines, such as through a network interface, modem, or other communicative coupling. Machines may be interconnected by way of a physical and/or logical network, such as an intranet, the Internet, local area networks, wide area networks, etc. One skilled in the art will appreciate that network communication may utilize various wired and/or wireless short range or long range carriers and protocols, including radio frequency (RF), satellite, microwave, Institute of Electrical and Electronics Engineers (IEEE) 802.11, Bluetooth^{®}, optical, infrared, cable, laser, etc.

Embodiments of the present disclosure may be described by reference to or in conjunction with associated data including functions, procedures, data structures, application programs, etc. which when accessed by a machine results in the machine performing tasks or defining abstract data types or low-level hardware contexts. Associated data may be stored in, for example, the volatile and/or non-volatile memory, e.g., RAM, ROM, etc., or in other storage devices and their associated storage media, including hard-drives, floppy-disks, optical storage, tapes, flash memory, memory sticks, digital video disks, biological storage, etc. Associated data may be delivered over transmission environments, including the physical and/or logical network, in the form of packets, serial data, parallel data, propagated signals, etc., and may be used in a compressed or encrypted format. Associated data may be used in a distributed environment, and stored locally and/or remotely for machine access.

Embodiments of the disclosure may include a tangible, non-transitory machine-readable medium comprising instructions executable by one or more processors, the instructions comprising instructions to perform the elements of the disclosures as described herein.

The various operations of methods described above may be performed by any suitable means capable of performing the operations, such as various hardware and/or software component(s), circuits, and/or module(s). The software may comprise an ordered listing of executable instructions for implementing logical functions, and may be embodied in any "processor-readable medium" for use by or in connection with an instruction execution system, apparatus, or device, such as a single or multiple-core processor or processor-containing system.

The blocks or steps of a method or algorithm and functions described in connection with the embodiments disclosed herein may be embodied directly in hardware, in a software module executed by a processor, or in a combination of the two. If implemented in software, the functions may be stored on or transmitted over as one or more instructions or code on a tangible, non-transitory computer-readable medium. A software module may reside in Random Access Memory (RAM), flash memory, Read Only Memory (ROM), Electrically Programmable ROM (EPROM), Electrically Erasable Programmable ROM (EEPROM), registers, hard disk, a removable disk, a CD ROM, or any other form of storage medium known in the art.

Having described and illustrated the principles of the disclosure with reference to illustrated embodiments, it will be recognized that the illustrated embodiments may be modified in arrangement and detail without departing from such principles, and may be combined in any desired manner. And, although the foregoing discussion has focused on particular embodiments, other configurations are contemplated. In particular, even though expressions such as "according to an embodiment of the disclosure" or the like are used herein, these phrases are meant to generally reference embodiment possibilities, and are not intended to limit the disclosure to particular embodiment configurations. As used herein, these terms may reference the same or different embodiments that are combinable into other embodiments.

The foregoing illustrative embodiments are not to be construed as limiting the disclosure thereof. Although a few embodiments have been described, those skilled in the art will readily appreciate that many modifications are possible to those embodiments without materially departing from the novel teachings and advantages of the present disclosure. Accordingly, all such modifications are intended to be included within the scope of this disclosure as defined in the claims.

## Claims

1. A device, comprising:
a cache processor (320) to execute an instruction (710) on behalf of an application (505), wherein the cache processor (320) is programmable to perform cache management of data for a particular application; and
a storage medium (335) to store the instruction (710),
wherein the instruction (710) is part of a cache program (705) associated with the application (505),
and wherein the device is configured to communicate with at least one of a first storage (305) and a second storage (310) of a storage device (120) based at least in part on the instruction (710),
**characterised in that** the cache processor (320) is further configured to execute a cache script programmed to perform cache management of data for a particular application.

2. The device according to claim 1, wherein the cache processor (320) includes:
a fetch unit (405) to fetch the instruction (710) from the storage medium (335); and
an execution unit (415) to execute the instruction (710).

3. The device according to claim 2, wherein the cache processor (320) further includes a scheduler unit (410) to schedule execution of the instruction (710) by the execution unit (415).

4. The device according to claim 2 or 3, further comprising a thread manager (425) to manage a first thread and a second thread of the cache program (705) executing on the cache processor (320).

5. The device according to any one of claims 1 to 4, wherein the storage medium (335) is configured to store metadata (720) including access information for a data stored in the first storage (305) or the second storage (310) or a tag (725) for the data.

6. A storage device (120), comprising:
a first storage (305) for a data;
a second storage (310) for the data;
a data controller (315) to manage access to the data on the first storage (305) and the second storage (310); and
the device according to any one of claims 1 to 5,
wherein the device communicates with at least one of the first storage (305) and the second storage (310) based at least in part on the instruction (710).

7. The storage device (120) according to claim 6, wherein:
the first storage (305) includes a first speed and a first capacity;
the second storage (310) includes a second speed and a second capacity;
the first speed is faster than the second speed; and
the second capacity is larger than the first capacity.

8. The storage device (120) according to claim 6 or 7, further comprising:
a first controller (325) to manage access to the data on the first storage (305); and
a second controller (330) to manage access to the data on the second storage (310).

9. A method for operating a device according to claim 1, comprising:
receiving (905), at a device, a request from an application executing on a processor (110) to access a data stored on a storage device (120);
determining (910), by the device, whether the data is stored on a first storage (305) or a second storage (310) of the storage device (120); and
using (915), by the device, a cache program (705) associated with the application (505) to manage the data on the first storage (305) and the second storage (310) of the storage device (120),
**characterised in that** a programmable cache processor (320) executes a cache script programmed to perform cache management of data for a particular application.

10. The method according to claim 9, wherein determining, by the device, whether the data is stored on the first storage (305) or the second storage (310) of the storage device (120) includes:
fetching, by a fetching unit (405) of the device, an instruction (710) of the cache program (705) from a storage medium (335); and
executing, by an execution unit (415) of the device, the instruction (710).

11. The method according to claim 9, wherein:
determining, by the device, whether the data is stored on the first storage (305) or the second storage (310) of the storage device (120) includes determining, by the device, that the data is stored on the first storage (305); and
using, by the device, the cache program (705) associated with the application (505) to manage the data on the first storage (305) and the second storage (310) of the storage device (120) includes updating a metadata (720) of the data.

12. The method according to claim 11, wherein using, by the device, the cache program (705) associated with the application (505) to manage the data on the first storage (305) and the second storage (310) of the storage device (120) further includes issuing, by the device, a second request to access the data to a data controller (315) of the storage device (120).

13. The method according to claim 12, further comprising sending, by the data controller (315), a response to the application executing on the processor (110).

14. The method according to claim 9, wherein:
determining, by the device, whether the data is stored on the first storage (305) or the second storage (310) of the storage device (120) includes determining, by the device, that the data is stored on the second storage (310); and
using, by the device, the cache program (705) associated with the application (505) to manage the data on the first storage (305) and the second storage (310) of the storage device (120) includes copying, by the device, the data from the second storage (310) to the first storage (305).

15. The method according to claim 14, wherein copying, by the device, the data from the second storage (310) to the first storage (305) includes:
reading the data from the second storage (310); and
writing the data to the first storage (305).

## Patentansprüche

1. Vorrichtung, aufweisend:
einen Cache-Prozessor (320) zum Ausführen einer Anweisung (710) im Auftrag einer Anwendung (505), wobei der Cache-Prozessor (320) so programmierbar ist, dass er eine Cache-Verwaltung von Daten für eine spezielle Anwendung durchführt; sowie
ein Speichermedium (335) zum Speichern der Anweisung (710),
wobei die Anweisung (710) Teil eines der Anwendung (505) zugeordneten Cache-Programms (705) ist,
und wobei die Vorrichtung so konfiguriert ist, dass sie zumindest teilweise basierend auf der Anweisung (710) mit mindestens einem von einem ersten Speicher (305) und einem zweiten Speicher (310) einer Speichervorrichtung (120) kommuniziert,
**dadurch gekennzeichnet, dass** der Cache-Prozessor (320) ferner so konfiguriert ist, dass er ein Cache-Skript ausführt, das so programmiert ist, dass es die Cache-Verwaltung von Daten für eine spezielle Anwendung durchführt.

2. Vorrichtung nach Anspruch 1, wobei der Cache-Prozessor (320) umfasst:
eine Abrufeinheit (405) zum Abrufen der Anweisung (710) aus dem Speichermedium (335); und
eine Ausführungseinheit (415) zum Ausführen der Anweisung (710).

3. Vorrichtung nach Anspruch 2, wobei der Cache-Prozessor (320) ferner eine Scheduler-Einheit (410) umfasst, um die Ausführung der Anweisung (710) durch die Ausführungseinheit (415) zu planen.

4. Vorrichtung nach Anspruch 2 oder 3, die ferner einen Thread-Manager (425) aufweist, um einen ersten Thread und einen zweiten Thread des Cache-Programms (705), die auf dem Cache-Prozessor (320) ausgeführt werden, zu verwalten.

5. Vorrichtung nach einem der Ansprüche 1 bis 4, wobei das Speichermedium (335) so konfiguriert ist, dass es Metadaten (720) speichert, die Zugriffsinformationen für Daten, die in dem ersten Speicher (305) oder in dem zweiten Speicher (310) gespeichert sind, oder ein Tag (725) für die Daten enthalten.

6. Speichervorrichtung (120), aufweisend:
einen ersten Speicher (305) für Daten;
einen zweiten Speicher (310) für die Daten;
einen Daten-Controller (315) zum Verwalten eines Zugriffs auf die Daten auf dem ersten Speicher (305) und dem zweiten Speicher (310); und
die Vorrichtung nach einem der Ansprüche 1 bis 5 ist,
wobei die Vorrichtung zumindest teilweise basierend auf der Anweisung (710) mit mindestens einem von dem Speicher (305) und dem zweiten Speicher (310) kommuniziert.

7. Speichervorrichtung (120) nach Anspruch 6, wobei:
der erste Speicher (305) eine erste Geschwindigkeit und eine erste Kapazität aufweist;
der zweite Speicher (310) eine zweite Geschwindigkeit und eine zweite Kapazität aufweist;
die erste Geschwindigkeit höher ist als die zweite Geschwindigkeit; und
die zweite Kapazität größer ist als die erste Kapazität.

8. Speichervorrichtung (120) nach Anspruch 6 oder 7, ferner aufweisend:
einen ersten Controller (325) zum Verwalten des Zugriffs auf die Daten auf dem ersten Speicher (305); und
einen zweiten Controller (330) zum Verwalten des Zugriffs auf die Daten auf dem zweiten Speicher (310).

9. Verfahren zum Betreiben einer Vorrichtung nach Anspruch 1, umfassend:
Empfangen (905) einer Anforderung von einer auf einem Prozessor (110) ausgeführten Anwendung an einer Vorrichtung, um auf Daten zuzugreifen, die auf einer Speichervorrichtung (120) gespeichert sind;
Bestimmen (910), durch die Vorrichtung, ob die Daten auf einem ersten Speicher (305) oder einem zweiten Speicher (310) der Speichervorrichtung (120) gespeichert sind; und
Verwenden (915), durch die Vorrichtung, eines der Anwendung (505) zugeordneten Cache-Programms (705) zum Verwalten der Daten auf dem ersten Speicher (305) und dem zweiten Speicher (310) der Speichervorrichtung (120),
**dadurch gekennzeichnet, dass** ein programmierbarer Cache-Prozessor (320) ein Cache-Skript ausführt, das zum Durchführen der Cache-Verwaltung von Daten für eine spezielle Anwendung programmiert ist.

10. Verfahren nach Anspruch 9, wobei das Bestimmen durch die Vorrichtung, ob die Daten auf dem ersten Speicher (305) oder dem zweiten Speicher (310) der Speichervorrichtung (120) gespeichert sind, Folgendes umfasst:
Abrufen einer Anweisung (710) des Cache-Programms (705) von einem Speichermedium (335) durch eine Abrufeinheit (405) der Vorrichtung; und
Ausführen der Anweisung (710) durch eine Ausführungseinheit (415) der Vorrichtung.

11. Verfahren nach Anspruch 9, wobei:
das Bestimmen durch die Vorrichtung, ob die Daten auf dem ersten Speicher (305) oder auf dem zweiten Speicher (310) der Speichervorrichtung (120) gespeichert sind, ein Bestimmen durch die Vorrichtung umfasst, dass die Daten auf dem ersten Speicher (305) gespeichert sind; und
das Verwenden des der Anwendung (505) zugeordneten Cache-Programms (705) durch die Vorrichtung zum Verwalten der Daten auf dem ersten Speicher (305) und dem zweiten Speicher (310) der Speichervorrichtung (120) ein Aktualisieren von Metadaten (720) der Daten umfasst.

12. Verfahren nach Anspruch 11, wobei die Verwendung des der Anwendung (505) zugeordneten Cache-Programms (705) durch die Vorrichtung zum Verwalten der Daten auf dem ersten Speicher (305) und dem zweiten Speicher (310) der Speichervorrichtung (120) ferner ein Ausgeben einer zweiten Anforderung zum Zugreifen auf die Daten an einen Daten-Controller (315) der Speichervorrichtung (120) umfasst.

13. Verfahren nach Anspruch 12, ferner umfassend ein Senden einer Antwort durch den Daten-Controller (315) an die auf dem Prozessor (110) ausgeführte Anwendung.

14. Verfahren nach Anspruch 9, wobei:
Das Bestimmen, durch das Vorrichtung, ob die Daten auf dem ersten Speicher (305) oder dem zweiten Speicher (310) der Speichervorrichtung (120) gespeichert sind, ein Bestimmen durch die Vorrichtung umfasst, dass die Daten auf dem zweiten Speicher (310) gespeichert sind; und
das Verwenden des der Anwendung (505) zugeordneten Cache-Programms (705) durch die Vorrichtung zum Verwalten der Daten auf dem ersten Speicher (305) und dem zweiten Speicher (310) der Speichervorrichtung (120) ein Kopieren der Daten von dem zweiten Speicher (310) auf den ersten Speicher (305) durch die Vorrichtung umfasst.

15. Verfahren nach Anspruch 14, wobei das Kopieren der Daten vom zweiten Speicher (310) auf den ersten Speicher (305) durch das Vorrichtung Folgendes umfasst:
das Auslesen der Daten aus dem zweiten Speicher (310); und
das Schreiben der Daten in den ersten Speicher (305).

## Revendications

1. Dispositif, comprenant :
un processeur de cache (320) pour exécuter une instruction (710) pour une application (505), le processeur de cache (320) étant programmable pour effectuer une gestion de cache de données pour une application particulière ; et
un support de stockage (335) pour stocker l'instruction (710),
dans lequel l'instruction (710) fait partie d'un programme de cache (705) associé à l'application (505),
et dans lequel le dispositif est configuré pour communiquer avec au moins une unité parmi une première unité de stockage (305) et une deuxième unité de stockage (310) d'un dispositif de stockage (120), sur la base, au moins en partie, de l'instruction (710),
**caractérisé en ce que** le processeur de cache (320) est en outre configuré pour exécuter un script de cache programmé pour effectuer une gestion de cache de données pour une application particulière. 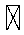

2. Dispositif selon la revendication 1, dans lequel le processeur de cache (320) comprend :
une unité de récupération (405) pour récupérer l'instruction (710) depuis le support de stockage (335) ; et
une unité d'exécution (415) pour exécuter l'instruction (710).

3. Dispositif selon la revendication 2, dans lequel le processeur de cache (320) comprend en outre une unité d'ordonnancement (410) pour ordonnancer l'exécution de l'instruction (710) par l'unité d'exécution (415).

4. Dispositif selon la revendication 2 ou 3, comprenant en outre un gestionnaire de threads (425) pour gérer un premier thread et un deuxième thread du programme de cache (705) s'exécutant sur le processeur de cache (320).

5. Dispositif selon l'une quelconque des revendications 1 à 4, dans lequel le support de stockage (335) est configuré pour stocker des métadonnées (720) comprenant des informations d'accès pour des données stockées dans la première unité de stockage (305) ou la deuxième unité de stockage (310), ou une étiquette (725) pour les données.

6. Dispositif de stockage (120), comprenant :
une première unité de stockage (305) pour des données ;
une deuxième unité de stockage (310) pour les données ;
un contrôleur de données (315) pour gérer l'accès aux données dans la première unité de stockage (305) et dans la deuxième unité de stockage (310) ; et
le dispositif selon l'une quelconque des revendications 1 à 5,
dans lequel le dispositif communique avec au moins une unité parmi la première unité de stockage (305) et la deuxième unité de stockage (310), sur la base, au moins en partie, de l'instruction (710).

7. Dispositif de stockage (120) selon la revendication 6, dans lequel :
la première unité de stockage (305) comprend une première vitesse et une première capacité ;
la deuxième unité de stockage (310) comprend une deuxième vitesse et une deuxième capacité ;
la première vitesse est plus rapide que la deuxième vitesse ; et
la deuxième capacité est supérieure à la première capacité.

8. Dispositif de stockage (120) selon la revendication 6 ou 7, comprenant en outre :
un premier contrôleur (325) pour gérer l'accès aux données dans la première unité de stockage (305) ; et
un deuxième contrôleur (330) pour gérer l'accès aux données dans la deuxième unité de stockage (310).

9. Procédé de fonctionnement d'un dispositif selon la revendication 1, comprenant les étapes consistant à :
recevoir (905), au niveau d'un dispositif, une requête provenant d'une application s'exécutant sur un processeur (110) pour accéder à des données stockées sur un dispositif de stockage (120) ;
déterminer (910), par le dispositif, si les données sont stockées dans une première unité de stockage (305) ou une deuxième unité de stockage (310) du dispositif de stockage (120) ; et
utiliser (915), par le dispositif, un programme de cache (705) associé à l'application (505) pour gérer les données dans la première unité de stockage (305) et la deuxième unité de stockage (310) du dispositif de stockage (120),
**caractérisé en ce qu'**un processeur de cache programmable (320) exécute un script de cache programmé pour effectuer une gestion de cache de données pour une application particulière.

10. Procédé selon la revendication 9, dans lequel le fait de déterminer, par le dispositif, si les données sont stockées dans la première unité de stockage (305) ou la deuxième unité de stockage (310) du dispositif de stockage (120) comprend les étapes consistant à :
récupérer, par une unité de récupération (405) du dispositif, une instruction (710) du programme de cache (705) depuis un support de stockage (335) ; et
exécuter, par une unité d'exécution (415) du dispositif, l'instruction (710).

11. Procédé selon la revendication 9, dans lequel :
le fait de déterminer, par le dispositif, si les données sont stockées dans la première unité de stockage (305) ou la deuxième unité de stockage (310) du dispositif de stockage (120) comprend le fait de déterminer, par le dispositif, que les données sont stockées dans la première unité de stockage (305) ; et
l'utilisation, par le dispositif, du programme de cache (705) associé à l'application (505) pour gérer les données dans la première unité de stockage (305) et la deuxième unité de stockage (310) du dispositif de stockage (120) comprend la mise à jour de métadonnées (720) des données.

12. Procédé selon la revendication 11, dans lequel l'utilisation, par le dispositif, du programme de cache (705) associé à l'application (505) pour gérer les données dans la première unité de stockage (305) et la deuxième unité de stockage (310) du dispositif de stockage (120) comprend en outre l'émission, par le dispositif, d'une deuxième requête d'accès aux données à destination d'un contrôleur de données (315) du dispositif de stockage (120).

13. Procédé selon la revendication 12, comprenant en outre l'envoi, par le contrôleur de données (315), d'une réponse à l'application s'exécutant sur le processeur (110).

14. Procédé selon la revendication 9, dans lequel :
le fait de déterminer, par le dispositif, si les données sont stockées dans la première unité de stockage (305) ou la deuxième unité de stockage (310) du dispositif de stockage (120) comprend le fait de déterminer, par le dispositif, que les données sont stockées dans la deuxième unité de stockage (310) ; et
l'utilisation, par le dispositif, du programme de cache (705) associé à l'application (505) pour gérer les données dans la première unité de stockage (305) et la deuxième unité de stockage (310) du dispositif de stockage (120) comprend la copie, par le dispositif, des données de la deuxième unité de stockage (310) vers la première unité de stockage (305).

15. Procédé selon la revendication 14, dans lequel la copie, par le dispositif, des données de la deuxième unité de stockage (310) vers la première unité de stockage (305) comprend les étapes consistant à :
lire les données depuis la deuxième unité de stockage (310) ; et
écrire les données dans la première unité de stockage (305).
